# EUROPEAN PATENT APPLICATION

(11) **EP 1 400 347 A2**
(43) Date of publication of application: **24.03.2004**
(21) Application number: 03255865.2
(22) Date of filing: 18.09.2003
(51) Int. Cl.: B32B 27/00, B29D 9/00, B05B 15/12

(54) **Improvements in and relating to powder coating systems**

(30) Priority: 20.09.2002 US 251930
(71) Applicant: NORDSON CORPORATION, Westlake, Ohio 44145-1119 (US)
(72) Inventor: Shutic, Jeffrey R., Wakeman, Ohio 44889 (US); Jones, Edward L., Strongsville, Ohio 44136 (US)
(74) Representative: Findlay, Alice Rosemary

(57) **Abstract**

A powder spray booth (2) with a powder recovery system having an overspray intake (18) communicating with the interior of the booth. A vertically extending duct (20) leads from the overspray intake to a powder recovery system such as, for example, a cyclone. The vertically extending duct may have doors (32) opening to the interior of the booth to provide access to the vertical duct for cleaning. The doors may have holes (120) to aspirate air from the booth interior to optimize air flow patterns within the booth. A diverter plate (26) within the booth (2) defines with the booth floor (10) a floor duct leading to the overspray intake (18). The diverter plate has apertures for allowing oversprayed powder to be collected through the plate. The diverter plate may be provided as two or more diverter plates held at different elevation levels within the booth to define a floor duct which is larger in parts of the floor duct which are closer to the overspray intake than parts of the floor duct which are farther from the overspray intake. The coating system may include an air assist which provides jets of air across a portion of the interior surface of the booth. The surface may be one or more sloped portions (22) of the floor and/or one or more portions of the diverter plate. The air supply may be pulsed to produce periodic bursts of air across the interior surface. The booth walls are made of non-conductive resin based cored composite materials. Various non-conductive fastening devices and two component resin bonding materials may be used to form mechanical joints to assemble a spray booth.

## Description

This invention relates to powder spray coating and, in particular, to the recovery of powder which has not adhered to the article to be coated from a powder spray booth.

The powder which does not adhere to an article to be coated in a powder spray booth is known as the "overspray". Overspray powder may miss the article to be coated, rebound from a surface of the article, or be deflected by the electrostatic fields in the spray booth away from the article.

It is known to recover overspray powder by exhausting the air from the booth and hence the air-bome overspray powder. The filter elements which have been used to recover overspray from powder spray booth are capable of removing substantially all the overspray from the spray booth exhaust air so that the powder may be reused. It is also known to use cyclone separators instead of, or in conjunction with filter elements for recovery of overspray. Cyclone separators are effective in removing the majority of the overspray from the spray booth exhaust air and are easier to clean than filters because very little powder is deposited inside the cyclone housing.

In known arrangements the cyclone separators have been connected to the powder spray booth by a duct extending from an overspray intake near the floor of the booth to the inlet of the or each cyclone. European Patent Application No. 94929600.8 discloses a powder coating system where the duct is built into the powder spray booth, with one of the side or end walls of the booth forming part of the duct.

In European Patent Application 98940476.9 there is disclosed a further development wherein the portion of the side or end wall which forms part of the duct is removable from the remainder of the wall to allow easy cleaning of the duct. That Application also discloses a system for collecting deposited overspray powder comprising a scraper bar which continuously reciprocates across the booth floor between the end walls to collect powder on the booth floor and move the collected powder towards the end walls of the spray booth adjacent to each of which overspray intakes are provided.

In recent years there has been a growing desire to be able to spray multiple colours in a single booth in rapid succession. However, changing powder colour requires cleaning of the booth to remove powder deposited on the walls, ceiling and floor which was not extracted by air exhaustion. Proper cleaning of the walls and floor of the powder spray booth between colour changes is very important to ensure acceptable production quality. Such cleaning may be carried out manually by an operator using a scraping and/or compressed air jet apparatus. However booths have been proposed which are intended to automate the deposited overspray powder cleaning process including the booth of European Patent Application No. 98940476.9 referred to above with its reciprocating scraper bar.

Whilst many developments have been made, there is a customer driven demand for even more rapid cleaning capability to reduce cleaning time still further. Furthermore, whilst automatic mechanical devices such as the reciprocating scraper bar of European Patent Application 98940476.9 do accelerate the cleaning process, they also increase construction cost and can be vulnerable to mechanical failure.

Cleaning is preferably conducted from one end of the booth to another and so, from the point of view of cleaning, the overspray intake of the powder recovery system would ideally be located at one end of the booth. However, from the point of view of spraying, the best location for the overspray intake is commonly held to be in the lengthwise centre of the booth to give balanced extraction air flow along the booth and therefore even air flow across the openings which are provided for the spray devices. When the overspray intake is provided at one end of the booth, attempts have therefore been made to modify the booth cross-section to produce the desirable air flow balance. In one known system the booth floor has side portions which slope downwards and the region therebetween is vertically offset to define a trough between the sloped side portions. A triangular insert is positioned in the trough during spraying. The combination of the sloped side portions and triangular insert helps balance the air flows along the length of the booth. However difficulties arise when the powder colour is to be changed as the triangular insert has to be removed for cleaning which adds to the cleaning time.

In another arrangement, shown, for example, in U.S. Patent 4715314, the booth floor is formed with a slot which extends the length thereof and connects to a duct also running the length of the booth. However the slot can accumulate powder when one colour is sprayed for a long period of time which makes cleaning more difficult.

It is also been proposed to reduce cleaning time by preventing powder from ever depositing on the floor of a spray booth. German Patent 3408014 describes a system where the floor of the booth is formed as a series of descending steps and air is blown across each step from the slot between it and the step thereabove. The aim is to provide an air stream across the width of the booth which will carry all powder falling towards the floor into the overspray intake and prevent the powder reaching the floor and depositing there. The step form of the booth floor however increases the overall complexity of the booth and this, and the fact that air has to be continuously supplied, makes the booth expensive.

German Patent Application No. 19644360 describes a booth which is also intended to prevent overspray powder reaching the floor. The booth has one or more nozzles for creating a generally horizontal airflow across the booth floor. The air flow diverts descending overspray powder towards the inlet of a powder recovery system and prevents the overspray powder from depositing on the floor. In one embodiment, a central baffle positioned above the floor creates an open-sided duct leading to the inlet and a nozzle directs air to each side. As with the system of German Patent 3468014 a continuous air supply is required.

As noted above, booths in which part of the floor is sloped are known. However, according to US Patent 3905785, sloping alone is insufficient to cause all the overspray powder to flow by gravity to the recovery system. The Patent proposes a booth in which the floor is constituted by at least one air-permeable inclined plate. Air is sucked from the booth through the plate which acts to filter out air borne overspray. Periodically air is blown up through the plate to fluidise the deposited overspray thereon and cause it to flow to a recovery system. The suction period may be five to twenty times longer than the blowing period. The concept is similar to that of cartridge filters which are periodically purged by reverse air jets.

The majority of known booths are rectangular. However, it is also known to provide circular booths. A circular booth is disclosed in, for example, EPA 0839522. A problem with known circular booths is that these have conical floors leading to a suction duct by which overspray powder is transferred to a recovery system. A pit is generally required to accommodate the cone and duct in order that articles to be sprayed can be received at the same level as other elements in the production line.

In addition to providing air flow improvements to remove overspray powder, new concepts in spray booth construction are being used to reduce the amount of overspray powder that is attracted or adheres to the spray booth interior surfaces. A major advance in this technology of low conductivity wall structures is described in PCT published patent application number 01/40524 for POWDER COATING BOOTH CONTAINMENT STRUCTURE (publication number WO 01/78905 published on 10/25/01) and pending United States Pat. App. Ser. No. 09/550,353 filed on April 14, 2000 for POWDER COATING BOOTH CONTAINMENT STRUCTURE, the entire disclosures of which are fully incorporated herein by reference. In brief, cored composite wall structures are used that exhibit extremely low conductivity and electrostatic properties, thereby minimizing the attraction of electrostatically charged overspray powder particles onto the surface of the wall. In contrast to conventional thermoplastic type spray booths, the cored composite walls do not electrostatically attract the overspray powder and are very easy and fast to clean, thereby significantly reducing color change times. The cored composite walls are made of resin based materials with reinforcing fibers and a suitable core such as a high density closed cell foam core PVC, for example. Although this wall structure is well suited to making strong, lightweight, easy to clean and self-supporting three dimensional booth structures, the process is high end in terms of cost. In many applications, an end user may not require such strength in the walls and instead needs a lower overall cost spray booth. The present invention then further includes the aspects of providing lower cost cored composite spray booths without compromising overall structural integrity and cleanability.

It is an object of the present invention to provide a colour spray apparatus in which powder colour can be changed quickly and easily and which, moreover, is of relatively simple construction.

It is another object of the present invention to provide a powder coating system in which both air borne and deposited overspray can be recovered by a system involving a small number of relatively simple parts which are themselves readily cleaned.

It is a further object of the present invention to provide a powder spray booth in which the collection of deposited overspray is facilitated whilst still balancing the extraction air flow along the length of the booth.

It is a still further object of this invention to provide a powder spray booth of generally circular configuration which can be easily incorporated in a production line and which is simple to clean.

The invention will now be summarised with respect to four principal aspects: a diverter plate; sloped floor with cleaning air; pulsed cleaning air apparatus, and pulsed cleaning air method.

In one aspect the present invention provides a powder coating system comprising a powder spray booth with walls and a floor having two side portions and a downwardly offset region therebetween which defines a trough between the side portions, one or more powder spray devices positioned with respect to the booth walls to spray articles passed through the booth via openings in the walls, a powder recovery system having an overspray intake communicating with the interior of the booth, the powder recovery system including suction means for drawing overspray powder from the booth interior via the overspray intake, and, a diverter plate held within the booth between the floor side portions such as to close at least part of the trough and form a floor duct which is in communication with the overspray intake, the diverter plate including at least one aperture for the passage of overspray powder deposited thereon to the duct.

It has been found that with this apparatus it is possible to even out air extraction to give balanced air flow in the booth whilst still providing an arrangement which is easy to clean particularly if, as is preferred, the diverter plate is movable to a second raised position allowing access to the trough. The provision of at least one aperture allows overspray powder deposited on the diverter plate to be drawn therethrough and into the powder recovery system.

Preferably the side portions are sloped down towards the diverter plate. The diverter plate may define a slot between it and each of the side portions.

Deposited overspray powder on the side portions will trickle down towards the diverter plate and be extracted by the air flow to the powder recovery system via the slots between the plate and the side portions. As already noted, deposited overspray powder on the surface of the plate will be extracted via the apertures therein. As a consequence the amount of deposited overspray powder in the booth at the start of the cleaning operation will be reduced so reducing the scale of the cleaning operation and consequently its duration.

The booth may have any desired configuration. It may have the common rectangular shape with the longitudinal axis running generally horizontally. Alternatively, the booth can be circular with the central axis running generally vertically. The provision of an air distribution duct in a circular booth formed by the diverter plate enables limitation of powder build up and optimisation of air distribution and velocities in the booth through control of the size and shape of the apertures in the diverter plate. Advantage can therefore be taken of the easy cleanability of circular booths without requiring that a special pit be provided to position the booth in a production line. This is a significant benefit as is the fact that operators can safely walk into the booth which is not possible with known circular booths having a conical base.

In a rectangular booth, the overspray intake may be provided at or near one end of the booth with the diverter plate extending from that end along part of the length of the booth. In a rectangular booth provided with a plurality of automatic powder spray devices and having slots in the side walls for the automatic powder spray devices, the length of the diverter plate may be the distance between the end and the gun slot furthest from the end plus an offset. The offset can be comparatively small, a suitable value for a common booth design being 200 mm.

It has been found that it is only necessary to provide the diverter plate in the part of the booth where automatic guns are employed. This is because there are a higher number of guns in the automatic gun portion of the booth and therefore more powder flow into the booth there from the guns. Also, this part of the booth is closest to the extraction fan. Without the diverter plate, the fan can distort the powder spray patterns from the guns and may draw the powder into the collection system before it has a chance to adhere to the part. The effect of the diverter plate is to equalize the suction force of the fan so that powder has more time to adhere to the part and oversprayed powder is drawn evenly towards the fan. In the manual gun section of the booth, there are fewer guns and they are farther away from the fan, so the patterns from those guns are not affected to such a great extent by the fan. Therefore, the diverter plate is not as necessary in the manual gun section of the booth.

In a rectangular booth of the design shown in European Patent Application No. 98940476.9 with an overspray intake at each end, a diverter plate may be provided extending from each end. It has been found that a booth with air intakes at both ends in fact produces the best balancing of the air flow in the booth and actually results in a "dead" zone in the middle of the booth where powder coating is particularly efficient since powder particles have an opportunity to adhere to the part relatively unaffected by the collection system air flows. The plates can be arranged to extend to either side of this "dead" zone.

In a particularly preferred embodiment, the diverter plate is formed in two or more sections, the diverter plate sections being arranged at different vertical spacings from the bottom of the trough such that the duct has different heights along its length. It has be found with this arrangement it is possible to improve still further the air flow balance in the booth and to obtain more even suction.

In this embodiment, the plate section or sections adjacent the or each overspray intake may have the greatest vertical spacing from the trough bottom. With a rectangular booth having an overspray intake at one end, the sections may be arranged in a descending series of steps towards the other end. With a circular booth having a centrally located overspray intake, the section thereabove may be at maximum spacing with one or more lower sections on either side. The narrowing of the duct away from the overspray intake produces the desired even suction and more balanced air flow.

The diverter plate is suitably provided with a plurality of apertures arranged in a pattern. With a rectangular booth, the pattern may be triangular with the apex being at the end of the booth closest to the fan. This pattern has been found to give the best combination of powder collection and air balancing. The total hole cross-sectional area gradually increases from the end towards the middle of the booth.

The apertures in a preferred form are elongate in the lengthwise direction of the plate to give maximum circumference for given cross sectional area and therefore maximum ability to draw deposited overspray from the upper surface of the diverter plate.

In accordance with a second aspect, the present invention provides a powder coating system comprising a powder spray booth having floor, ceiling and walls, one or more powder spray devices positioned with respect to the walls to spray articles passed through the booth via openings in the walls, and a powder recovery system having an overspray intake communicating with the interior of the booth, the powder recovery system including suction means for drawing overspray powder from the booth interior via the overspray intake, wherein at least a portion of the booth floor is sloped and wherein cleaning air supply means is provided for directing air down the sloped portion(s).

Whilst it has been known to make at least a portion of booth floors sloping, the intended result of this, that deposited overspray powder will eventually trickle down the sloped portion, does not always occur. There can be significant build ups of deposited overspray powder on the sloped portion or portions which adds to cleaning time and also gives rise to danger of explosions. By providing a cleaning air supply which directs air down the sloped portion or portions, downward movement of deposited overspray powder is ensured to bring the deposited overspray powder to a region where it can be easily cleaned, either manually or automatically by a mechanical scraper or the like and/or extraction in the exhaust air of the powder recovery system.

The cleaning air supply means may comprise a source of air and at least one plenum extending along at least part of the sloped portion and located at the upper edge of the sloped portion, the plenum having at least one air outlet, preferably plural air outlets.

Very preferably the air source provides periodically pulses of air to the air outlets. It has been found that it is an unnecessary waste of energy to constantly direct air across the slope portion or portions and it suffices just to pulse the air to start movement of deposited overspray powder down the sloped portion or portions. It is currently believed that the best effects are achieved when the cleaning air supply means directs the air generally parallel to the surface of the sloped portion or portions, preferably at an angle of 1-3° to the sloped portion or portions.

In the particularly preferred configuration of the first aspect, the cleaning air supply means of the second aspect may direct air down the side portions along the length of the diverter panel.

In accordance with a third aspect, the present invention provides a powder spray system having a floor, and walls, one or more powder spray devices positioned with respect to the walls to spray articles passed through the booth via openings in the walls, and a powder recovery system having an overspray intake communicating with the interior of the booth, the powder recovery system including suction means for drawing overspray powder from the booth interior via the overspray intake, wherein a cleaning air supply means is provided comprising a source of air and at least one plenum with plural air outlets, the air source providing pulses of air to the air outlets and the plenum being arranged to direct the air pulses across an internal surface of the booth on which overspray powder is deposited.

It has been found that pulses of air may be effective for collection of deposited powder across any internal surface of the booth not just sloped surfaces. The pulses of air cause the deposited overspray powder to collect, either by falling in the case of the ceiling or walls, or by movement along or across the booth in the case of the floor and so facilitate extraction of the deposited overspray powder by the powder recovery system. Good results are achieved without the need for a constant air flow or a complicated structure for directing the air. Thus the system is very economical both as regards manufacture and operation.

The air source may be a compressed air source, one or more fans or an air supply of the powder recovery system. The former has the advantage of cheapness whilst the latter makes for compactness and quietness since fans are relatively noisy.

Very preferably the first aspect is combined with the second and/or third which results overall in a very significant reduction in cleaning time coupled with even air distribution across the booth which produces higher transfer efficiency since the powder particles are given a greater opportunity to adhere to the part. These advantages are accomplished while good powder containment within the booth is also being achieved.

The invention also provides in a fourth aspect a method of operating a powder coating system including a powder spray booth having a floor and walls, one or more powder spray devices and a powder recovery system with an overspray inlet communicating with the interior of the booth, the method comprising periodically directing jets of air across an internal surface of the booth to collect deposited overspray powder thereon.

The method thus involves providing air assist in the booth which facilitates collection and removal of deposited overspray powder.

The internal surface may be the floor and/or one or more walls and/or the ceiling of the booth.

The jets of air are preferably directed sideways across the surface, or lengthwise along the booth. In this way the powder is gathered together and easily collected by a cleaning operation along the booth which may be either manual or automatic.

It has been found that good results are achieved when the air jets are pulsed on for five seconds for every five minutes of spraying of articles in the booth. This prevents any significant build-up of deposited overspray powder by causing removal of the majority of deposited overspray from the booth with the result that the inventory of powder moving around in the system, particularly the quantity within the booth itself, is kept to a minimum.

Alternatively or additionally the jets of air can be pulsed just prior to a colour change so that the amount of deposited powder which has to be removed during the cleaning operation is minimised.

Very preferably this fourth aspect is combined with the second aspect and the air jets are directed across at least part of a sloping portion of the booth floor. For effective movement of deposited overspray powder on the sloping portion(s), the air jets are directed generally parallel the sloping portion(s), preferably at an angle of between 1-3° thereto.

Still a further aspect of the invention relates to the use of pressurized air to blow off overspray powder from the surface of the diverter plate. In one embodiment, the diverter plate has sloping surfaces, and an air plenum is provided along the apex to direct pressurized across the sloping surfaces. Overspray powder is thus blown off the diverter plate and into the floor duct below. The pressurized air may be a continuous flow or pulsed. The use of pressurized air to blow off the diverter plate may be used alone or in combination with the blow off feature of the sloped floor.

Still another aspect of the invention relates to the use of a vertically extending duct having a lower end in communication with the overspray intake and the floor duct. In one embodiment, the vertically extending duct has a removable portion such as doors that form part of the spray booth wall structure. The vertical duct removable portion is provided with one or more holes, slots or other openings to aspirate air from the spray booth during a spraying operation. Preferably the openings are located at an upper region of the vertical duct. Sliding wall sections of the spray booth may also be provided as required.

The invention also contemplates methods for cleaning a spray booth and methods for recovering overspray powder during a powder spraying operation using one or more of the above aspects of the present invention, as set forth in greater detail hereinafter.

Still another aspect of the invention relates to a spray booth having a cored composite wall structure using lower density core materials. The lower density core material does not adversely reduce the wall strength but does significantly reduce material cost. The walls are preferably but not necessarily made as flat panels which simplifies shipping from the manufacturing plant to the end user facility. The use of thermoset resin based composite structures permits the use of two component thermoset resin bonding materials to join structural parts of the spray booth.

In accordance with another aspect of the invention, a process is provided for making cored composite wall structures with lower density core materials. The process may include among other things a vacuum plus heat cure, as well as kerfing, slitting, scoring, thermoforming or otherwise establishing passageways, channels or other suitable paths in the core surfaces to allow air to ventilate from the structure. The process further may include the use of a polyester film or other suitable material or surface as the tooling surface for the functional (i.e. powder exposed) surface of the structure as well as the non-functional (i.e. outside) surface of the structure. Such a tooling surface is "suitable" in the sense that it preferably separates from the composite structure during cure to minimize secondary finishing operations. However, in some processes, it may be desired or necessary to use a tooling surface that does not result in an as molded finished surface. The process may also include the use of a pressure plate to compress the layers together during cure. In contrast to prior processes, in this process the binding resin layers may be laid up prior to application of the vacuum.

Still a further aspect of the present invention contemplates various structural elements used to assemble a complete spray booth, including but not limited to non-conductive fasteners, load bearing bushings, and pultruded non-conductive elements to establish mechanical joints.

One element of this aspect is a fastener for a cored wall comprising a shank, a head at one end of said shank, an indentation on said shank, and resin applied to said shank when said shank is inserted into a hole in said wall, said resin curing and bonding to the core and flowing into said indentation to form a retaining element when cured.

The invention will now be further described by way of example with reference to the accompanying drawings in which:
Figure 1 is a perspective view partly cut away of a powder booth forming part of a first embodiment of a powder coating system in accordance with the invention;
Figure 2 is a perspective view partly cut away of part of a powder spray booth forming part of a second embodiment of a powder coating system in accordance with the invention;
Figure 2A is a perspective view partly cut away of another embodiment of the invention;
Figure 3 is a sectional detail of part of the booth of Figure 2;
Figure 3A is a sectional detail of an alternative embodiment of the booth part of Figure 3.
Figures 4 and 5 are plan views of a diverter plate for use in the spray booth of Figures 1 and 2;
Figure 6 is an end view of the diverter plate of Figures 4 and 5;
Figures 6A and 6B are respectively an end view and transverse cross-section view of another embodiment of the diverter plate of Figure 6;
Figure 7 is a schematic side view of part of a third embodiment of a powder coating system in accordance with the invention;
Figure 8 is a perspective view partly cut away of part of a powder spray booth forming part of the powder coating system of Figure 7;
Figure 9 is a schematic end view of a fourth embodiment of a powder coating system in accordance with the invention;
Figure 10 is a plan view of the powder coating system of Figure 9;
Figure 11 is a schematic plan view of a fifth embodiment of a power coating system in accordance with the invention;
Figure 12 is a section along X-X of the powder coating system of Figure 11;
Figure 13 is a section along Y-Y of the powder coating system of Figure 11;
Figure 14 is a schematic end view showing a cleaning system for use in the powder coating systems of Figures 9 to 13;
Figure 15 is a schematic plan view showing the cleaning system of Figure 14;
Figure 16 is a schematic end view showing an alternative cleaning system for use in the powder coating systems of Figures 9 to 13;
Figures 17 and 18 are plan views showing possible modifications which can be made to the powder coating booth of the powder coating systems of Figures 9 to 13;
Figure 19 is a schematic view of a powder spray booth forming part of a further embodiment of a powder coating system in accordance with the invention;
Figures 20 and 21 are schematic views of alternative powder spray booths;
Figure 22 illustrates layers of a cored composite wall structure in exploded view in accordance with the invention.
Figure 23 illustrates a cored composite wall structure having pasageways in the core surface to ventilate air during cure;
Figure 24 illustrates a mechanical joint between angled panel sections using a pultruded reinforcing member;
Figure 25 illustrates a mechanical joint between angled panel sections using a resin fill;
Figure 26 illustrates a mechanical joint producing an angled connection using a resin fill and optional reinforcing member by partly cutting a single panel;
Figures 27-29 illustrate uses of pultruded reinforcing or joining members for assembling together cored composite wall sections of a spray booth;
Figures 30-31 illustrate load bearing bushing embodiments made of non-conducting materials;
Figure 32 illustrates a pultruded member that forms a mechanical joint between two angled panels;
Figure 33 is an end view of an alternative floor portion of the spray booth of Figure 1; and
Figures 34-35 illustrate embodiments of pultruded members used to form air curtains at slot openings in the spray booth of Figure 1, including gun slot openings and the conveyor slot.

It is important to note that this application describes a number of different aspects, features and embodiments of the invention. Although these various aspects and embodiments may illustrate various combinations and uses of these aspects, the invention should not be construed as requiring such combination and uses. Those skilled in the art will readily appreciate that the various aspects of the invention as set forth herein may be used alone or in various combinations and sub-combinations whether explicitly described herein or not.

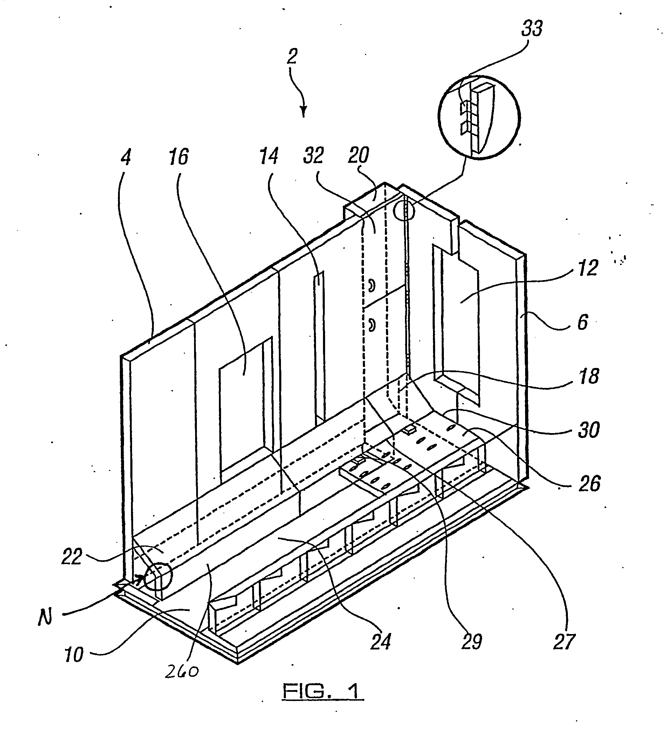

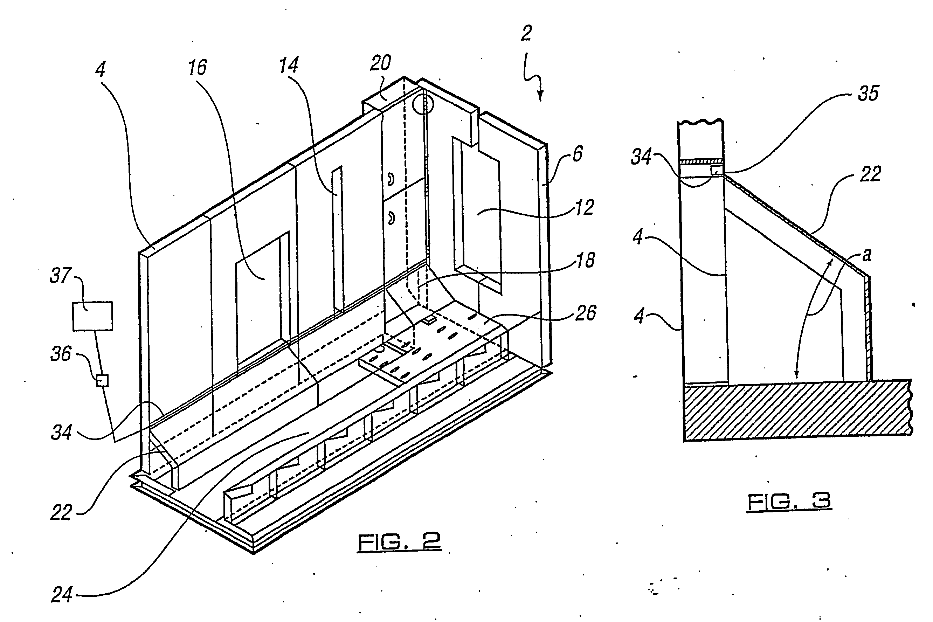

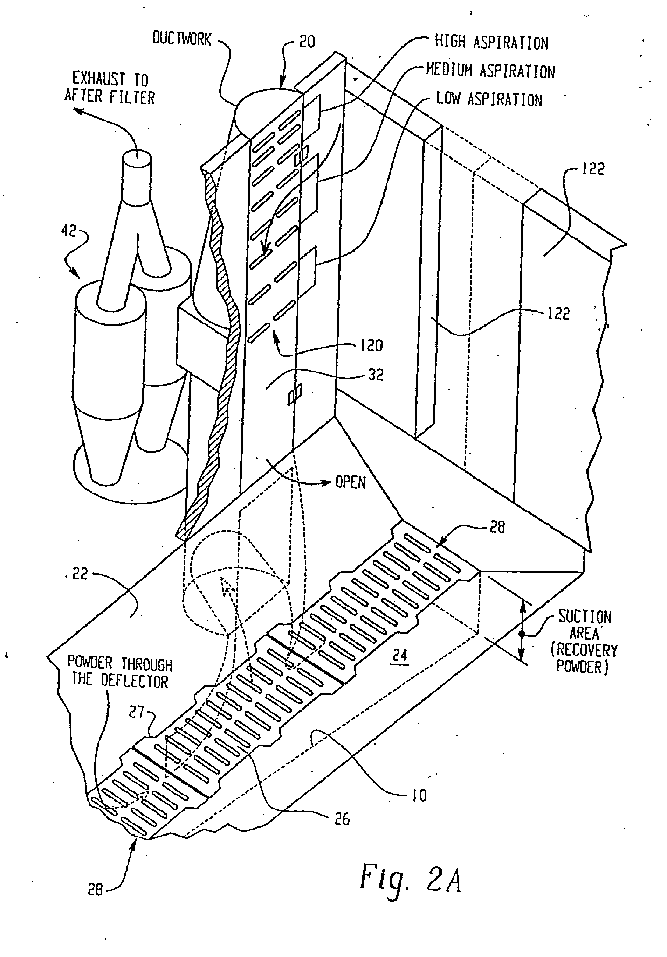

Figures 1 and 2 show a rectangular powder spray booth 2 with side walls 4, end walls 6 and a floor 10. The booth 2 further has a conveyor (not shown) from which objects are suspended and conveyed through the booth 2 via openings 12 in the end walls 6 for coating with powder by a number of spray devices (also not shown). The booth 2 shown in Figures 1 and 2 has a slot 14 for an automatic spray device and an opening 16 to allow use of a manually operated spray device in each side wall. However it will be appreciated that the number and position of spray devices can be varied depending on the objects to be coated.

The ceiling, walls 4, 6 and floor 10 of the booth 2 are preferably made from a non-conducting material such as plastic. By using plastic, the powder sprayed by the spray devices if electrostatically charged will have a reduced tendency to adhere to the ceiling and walls 4, 6 since it will not be electrostatically attracted to the walls 4, 6 and ceiling and instead will fall under gravity and collect on the floor 10 of the booth 2. For durability the floor 10 or at least the part or parts on which an operator will walk may instead be made of stainless steel.

The booth 2 will be provided with a powder recovery system which may include filters and/or one or more cyclone separators as further described below with respect to other embodiments of the powder coating system. Whatever form the powder recovery system takes, there will be an overspray intake communicating with the interior of the booth 2 and providing a current of exhaust air within the booth and into the overspray intake. The current of exhaust air will serve to extract airborne overspray powder. The skilled man can readily choose a suitable powder recovery system from those known in the art.

As rectangular powder spray booths are preferably cleaned from one end to the other, for the purposes of cleaning the overspray intake is preferably located at one end of the booth. In the booth depicted in Figures 1 and 2, the overspray intake is shown in dotted outline at 18 and is located at one comer of the booth. Rising thereabove is a duct 20 which leads to the powder recovery system which is preferably a powder recovery system of the type styled "close coupled cyclone" as described in European Patent Application No. 94929600.8, now European Patent No. 723,481.

The floor 10 of the booth 2 shown in Figures 1 and 2 includes two sloping portions 22 on either side thereof, the sloping portions 22 being spaced and the remainder of the floor 10 being offset therefrom to define a trough 24 between the sloping portions 22. The wall of the trough 24 is cut away at the end of the booth 2 where the overspray intake 18 is located to provide a connection between the overspray intake 18 and the trough 24 and hence the rest of the interior of the booth 2.

A diverter plate 26 is positioned in the trough 24 at the end where the overspray intake 18 is located and extends from that end. The length of the diverter plate 26 is preferably equal to the distance from the end of the booth 2 to the centre line of the automatic spray device slot 14 which is furthest from that end plus an offset. The offset may suitably be of the order of 200 mm. The plate 26 is suitably spaced from the side portions 22 to define slots 27 therebetween.

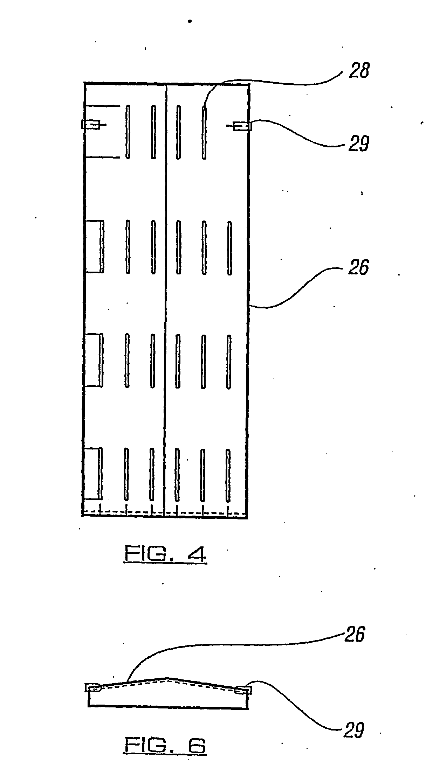

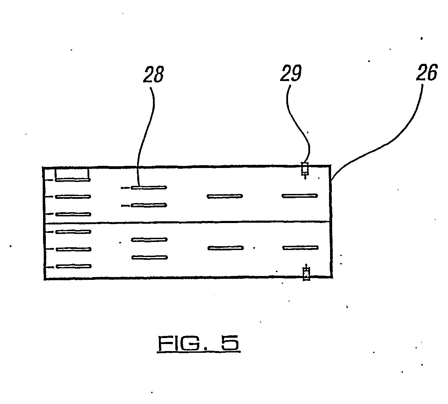

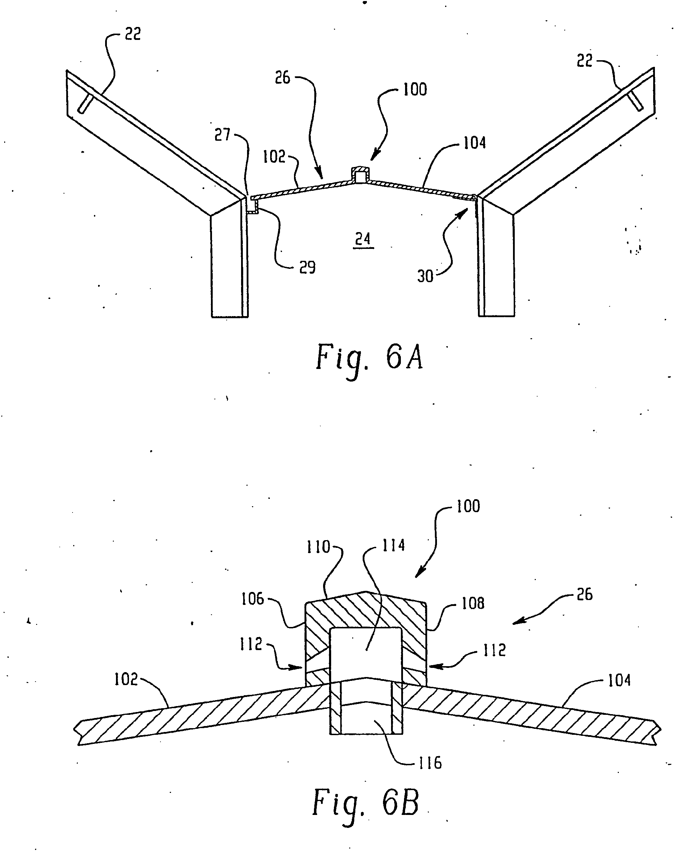

The plate 26 has a pattern of holes 28 therein. Two possible patterns are shown in Figures 4 and 5. Both are triangular with the apex being at the end of the booth 2 where the overspray intake 18 is located. The holes 28 are elongate in the lengthwise direction of the plate 26 and hence the booth 2. As illustrated in Figure 6 the plate 26 has an upper surface which is slightly peaked for strength and stiffness.

The diverter plate 26 is supported by tabs 29 in the position shown in Figures 1 and 2 but is mounted to the end wall 6 via hinges 30 to allow it to be pivoted up and against the end wall 6. The portion of duct 20 extending above the side floor portions 22 is separated from the interior of the booth 2 by two doors 32 each of which is also mounted by hinges 33 so that the doors 32 can also be pivoted away against the end wall 6 allowing access to the interior of the duct 20.

With the diverter plate 26 installed over the trough 24, a floor duct is formed by the diverter plate 26 and the trough structure whereby overspray powder is drawn into the floor duct through the holes 28 and the slots 27. The overspray powder is drawn by the powder recovery system air flow suction into and through the floor duct and into the vertical duct 20 through the overspray intake 18.

With reference to Figures 6A and 6B, in an alternative embodiment, the peaked diverter plate 26 includes a longitudinally extending diverter plate blow-off air plenum 100. The diverter plate plenum 100 is preferably positioned along the apex or peak of the sloped sides 102, 104 of the diverter plate 26 and extends along all or a portion of the length of the diverter plate 26. It should be noted that the diverter plate plenum 100 may also be used with a flat, round or other shaped diverter plate such as is shown, for example, in Figures 1 and 2 herein.

The diverter plate plenum 100 is an integral cap-like structure having two vertical sides 106, 108 and a top 110. The plenum 100 may be mounted on the diverter plate 26 by any suitable technique. Each vertical side 106, 108 is provided with a lengthwise series of openings 112, in this example a series of air jets. Each air jet 112 extends through its respective plenum side 106, 108 and opens to an interior air passage 114 of the plenum 100. Each air jet 112 is also angled so as to direct a flow of air generally across the outer surface of the diverter plate 26 to blow powder off the plate. The dislodged powder is blown into the floor duct via either or both of the diverter plate holes 28 or the side slots 27 between the plate 26 and the sloped floor portions 22.

Pressurized air is supplied to the internal air passage 114 and directed out the air jets 112. The pressurized air is supplied to the plenum 100 via one or more inlet ports 116. These inlet ports 116 communicate with a suitable source of pressurized air, such as regulated shop air generally available in industrial manufacturing facilities. The plenum 100 may provide continuous or pulsed air. The pulsed air may be provided using a source 36 and a valve 37 such as, for example, those shown in Figure 2. The use of pressurized air to blow off the diverter plate 26 may be used either alone or in combination with the floor blow off feature described herein below with respect to Figure 2. The invention thus also provides a method for recovering overspray powder during a spraying operation by providing pressurized air that blows off powder from the sloped floor and/or diverter plate into the floor duct and out to the powder recovery system.

The plenum 100, as well as the diverter plate 26, may be made of any suitable material including metal or composite non-metal materials, with the required strength. In an alternative design, a slot or series of slots may be used for the openings 112 rather than a series of air jets. Still further, if the sloped sides 102, 104 of the diverter plate 26 are hinged, the plenum 100 may be attached lengthwise to only one of the sloped sides 102, 104. Any suitable structure other than a plenum may alternatively be used to provide a flow of pressurized air along the top center of the diverter plate 26 and to direct air across the surface of the diverter plate.

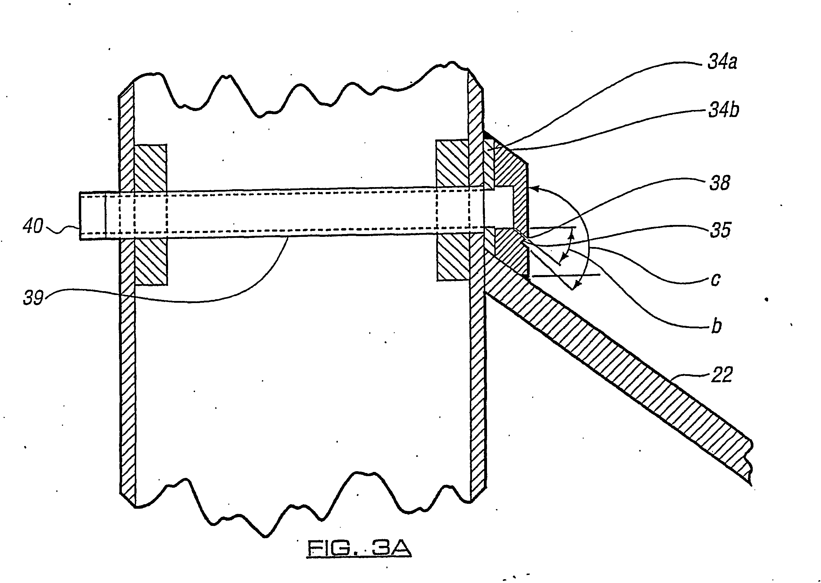

The booth 2 shown in Figure 2 differs from that of Figure 1 in that a plenum 34 is provided at the upper edge of each of the side portions 22. The plenum 34 on the left-hand of the booth in the sense of the Figures is shown in greater detail in the sectional view of Figure 3. The plenum 34 comprises a tube mounted within the wall 4 and formed with spaced outlets 35 along the length thereof. The plenum 34 is connected to a source of pressurised air via a valve shown schematically at 36 and 37, respectively, in Figure 2. Air from the source 36 is directed out of the air outlets 35 as jets across the side portions 22.

With reference to Figure 2A, in an alternative embodiment the optional hinged or otherwise optionally removable doors 32 of the vertical duct 20 are provided with one or more holes 120, suitably spaced along the vertical length of the doors 32 to aspirate air from the spray booth 2 to further optimize air flow patterns within the booth. For example, in the example of Figure 2A, more holes are provided near the top of the door 32 than at the middle or bottom portions thereof. This produces higher aspiration near the upper portion of the vertical duct 20 in order to produce a suction that draws in powder entrained air in the upper regions of the booth 2 interior before the powder descends to the floor area. Although a cyclone separator 42 is illustrated in Figure 2A, other powder recovery systems may be used, as noted hereinbefore.

The vertical duct 20 may be used alone or in combination or various sub-combinations with other aspects of the invention described herein. For example, the vertical duct may be used with a booth that has a sloped floor and/or floor duct, or may simply be an additional feature to a conventional spray booth that does not have the floor duct and sloped floor features. The vertically extending duct 20 thus also may be used to enhance powder recovery methods during a spraying operation by aspirating air and overspray powder from upper regions of the spray booth before the powder alights on any of the booth interior surfaces.

Additional optional features illustrated in Figure 2A include providing sliding doors 122 as part of one or both of the end walls 6. The doors 122 are shown in an open position, with the closed position shown in phantom lines. The sliding doors provide selectable access to the booth 2 interior for conveying parts there through, without the need for a permanent opening in the end wall 6. This provides a more enclosed spray booth to further improve and control air flow patterns within the booth.

Another optional feature illustrated in Figure 2A is to provide a lengthwise slope to the floor 10 that forms part of the trough 24. The floor 10 may be sloped so as to further contribute to a balanced air flow and suction within the spray booth. The floor is preferably sloped downward towards the overspray extraction intake duct 18 end so as to provide greater suction in the region of the automatic spray guns. A dual sloped floor may be used in those situations where an overspray intake is used at each end of the spray booth 2.

Figure 3A shows an alternative arrangement for providing pulsed air flow across the side portions 22. The arrangement has a number of features in common with that illustrated in Figure 3 and where appropriate like reference numerals will be used for like parts.

In the arrangement of Figure 3A, a plenum 34 again extends the length of the side portion at its upper edge. The plenum is formed in two parts 34a, 34b, the forwardmost part 34b being formed with spaced outlets 35 which extend to a generally v-shaped groove 38 which is milled in the forwardmost part 34b.

The plenum is supplied by a series of air feed tubes 39 spaced along the length of the booth. The feed tubes 39 are in turn supplied by a valved pressurised air source as in the arrangement of Figure 3 but not shown in Figure 3A, the connections being via threaded inlet fittings 40.

Whichever arrangement is employed, that of Figure 3 or that of Figure 3A, the air outlets 35 are preferably arranged to direct the air jets at an angle of 1-3° to the side portions 22. Therefore if the angle (a) of the side portions 22 is 37o with respect to the horizontal floor of the booth, the air outlets 35 will direct air at an angle (b) of 38-40° to the horizontal. This orientation of air outlets 35 will cause the air jets to impinge on side portion 22 at an angle of 1 degree to 3 degrees. In the arrangement of Figure 3A where the groove 38 is provided, the lower wall of the groove may be at an angle (c) of 135° to the vertical, that is, 45° to the horizontal.

The plenum 34 of the arrangement shown in Figure 3 may be a PVC extrusion which is bonded to the inner panel 41 of wall 4. Alternatively, as is illustrated by Figure 3A, the plenum can be attached externally of the wall 4. The plenum 34 can also take other forms from those illustrated in Figures 3 and 3A.

In use, the booth 2 is employed to spray powder on to objects passing therethrough either from automatic guns extending through the slots 14 and/or by manual guns directed through the openings 16. Air borne overspray powder is extracted from the interior of the booth 2 on the current of exhaust air produced by the powder recovery system via the overspray extract 18 and duct 20. Overspray powder which falls out of the transport air provided by the powder recovery system will be deposited on the floor 10 of the booth 2 and so on the side portions 22, the bottom of the trough 24 and the plate 26. The flow of exhaust air caused by the air recovery module along the trough 24 will tend to draw deposited overspray powder on the upper surface of the diverter plate 26 down into the trough 24 therebelow either through the holes 28 or the slots 27 between the side portions 22 and the diverter plate 26. It has been found that the elongate shape of the holes 28 maximises the area therearound from which deposited overspray powder is drawn into the holes 28 and thence to the overspray intake 18 on the current of exhaust air. The peaking of the upper surface 29 of the plate 26 assists the passage of deposited overspray powder not drawn through the holes 28 into the slots 27 and so again to the overspray intake 18.

Deposited overspray powder on the side portions 22 will to an extent by gravity naturally trickle down the side portions due to their sloping and into the trough 24 and so into the current of exhaust air produced by the powder recovery system. The booth 2 of Figure 2 however provides an air assist to this process through the plenums 34. The jets of air produced from the air outlets 35 of the plenums 34 increase the movement of the deposited overspray powder down the side portions 22. With short runs between colour changes, an air pulse may be provided just prior to the colour change. With longer runs, an air pulse is provided periodically to prevent deposited overspray powder build-up and so reduce the inventory of powder within the system, particularly the amount of powder in the booth 2. Whilst the air assist could be provided constantly, it has been found that in fact suffices to provide periodic pulses of air to set in motion the deposited overspray powder on the side portions 22. In one successful experiment, a pulse of five seconds every five minutes served to keep the side portions 22 reasonably clear of deposited overspray powder. Pulsing the air, as opposed to constantly supplying compressed air, reduces system energy costs.

The air assist provided by the plenums 34 not only helps keep the side portions 22 clear but also increases the collection of deposited overspray powder on the upper surface from the diverter plate 26.

The great majority of deposited overspray powder which is collected off the side portions 22 and the diverter plate 26 is re-entrained in the exhaust air flow of the powder recovery system and so extracted as, in effect, air borne overspray powder from the booth 2.

The diverter panel 26 could extend the full length of the booth 2. However it has been found that it suffices for it to extend just past the slots 14 for automatic guns by an offset which, as noted above, can be in the order of 200 mm. This is because the higher number of guns in the automatic gun portion of the booth produces more powder flow, and this greater powder flow is closer to the fan than the manual guns. The effect of the diverter plate is to equalize the suction force of the fan so that the powder has more time to adhere to the part and oversprayed powder is more evenly drawn into the collection system. Since the manual guns are farther from the fan, their spray patterns are not as greatly affected by the fan and the need for the diverter plate is therefore reduced with respect to those guns.

The diverter plate 26 functions to even out air distribution along the booth 2 to give an air balance in the powder booth which leads to higher transfer efficiency while ensuring good powder containment. Thus it serves to reduce the amount of deposited overspray powder and so increase the amount of air borne overspray powder. This balancing effect is achieved in part by the pattern of holes 28. As the diverter plate 26 is an air flow restrictor, the size, number and pattern of the holes determines the air velocity through the overspray intake 18. As an example, the diverter plate 26 may be arranged so that in combination with the input air velocity of the powder recovery system and the cubic feet per meter rating of the booth 2, the air velocity through the overspray intake 18 is 2000 ft/min.

The booth 2 shown in Figures 1 and 2 has a single diverter plate 26 which is used in conjunction with the single overspray intake 18. However in a booth with two overspray intakes such as that shown in European Patent Application No. 98940476.9, a diverter plate 26 could be provided at both ends extending towards the middle of the booth 2. The diverter plates 26 would preferably stop short of the "dead" zone in the middle of the booth which it has been found is created by the provision of two overspray intakes, one at each end of the booth. The dead zone is a relatively quiet area of the booth, in that the air flows caused by the collection system are not as strong in that area of the booth as in the remainder of the booth.

During spraying, air is periodically supplied to the plenums 34 to produce air jets down the side portions 22 and so cause movement of deposited overspray powder thereon into the trough 24 and on to the diverter plate 26. The air jets will also assist in keeping the diverter plate 26 clean. In one working embodiment, the plenums 35 had 0.5 mm diameter holes set at a 15 mm spacing and powder collection was achieved by blowing air at 4 bar pressure for five seconds every five minutes. As will be appreciated, the air assist parameters given for any given booth will depend on various parameters such as the type of powder coating material, the configuration on the booth, and in particular, the angle of sloping of the side portions 22. The provision of air assist means that if desired the angle of sloping can be reduced which makes it easier for operators to move around within the booth 2 and facilitates construction of the booth 2.

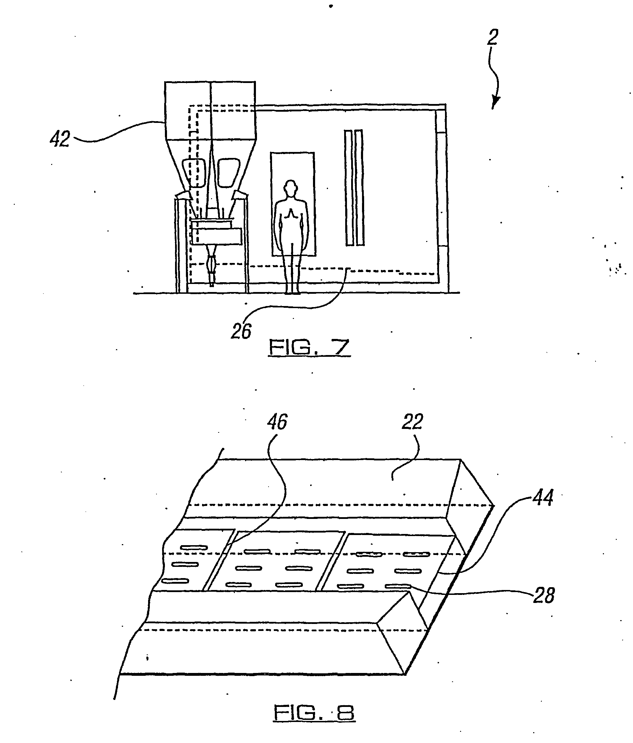

Figures 7 and 8 illustrates schematically a further embodiment which has many features in common with those of Figures 1 and 2 and therefore like reference numerals will be used for like parts. In the embodiment shown in Figures 7 and 8, the diverter plate 26 extends the length of the booth which is provided at one end with a powder recovery system having a cyclone separator 42. The plate 26 need not extend the full length of the booth and could instead stop short of the end distant from the powder recovery system like the plate 26 of the powder spray systems illustrated in Figures 1 and 2. However, unlike those systems, the plate 26 is formed in a plurality of sections 44 each of which may be considered as a separate diverter plate, the plural sections being arranged as a series of steps descending away from the powder recovery system. The sections 44 may be integral or separate. As illustrated in Figure 8 they may be arranged such that a slot 46 is provided between each section 44 and the next section down the booth.

The advantage in embodiments illustrated in Figures 7 and 8 is that it has been found to give even more balanced airflow throughout the booth because of the narrowing powder suction duct below the diverter plate 26 as the diverter plate sections 44 step down in the direction away from the cyclone separator 42. In addition, the diverter plate sections 44 are kept almost free of powder due to the airflow striking their surfaces in an almost parallel manner and drawing powder through the slots 46 formed between the plate sections 44.

Whilst rectangular booths as shown in Figures 1, 2 and 7 are very common, it is also known to use cylindrical or circular booths. With many known circular booths there is a problem which is that, for effective overspray powder extraction, it has been found necessary to provide a conical floor. In order to accommodate the conical floor the booth has either to be very tall or, in order that articles may be received at the same level as at other stations of a conveyor line, a pit has to be provided for the conical floor.

It has now been found that it is possible to obtain good overspray powder recovery with a circular booth having a flat base by incorporating therein a diverter plate and using this in conjunction with a powder recovery system which exhausts air from the booth.

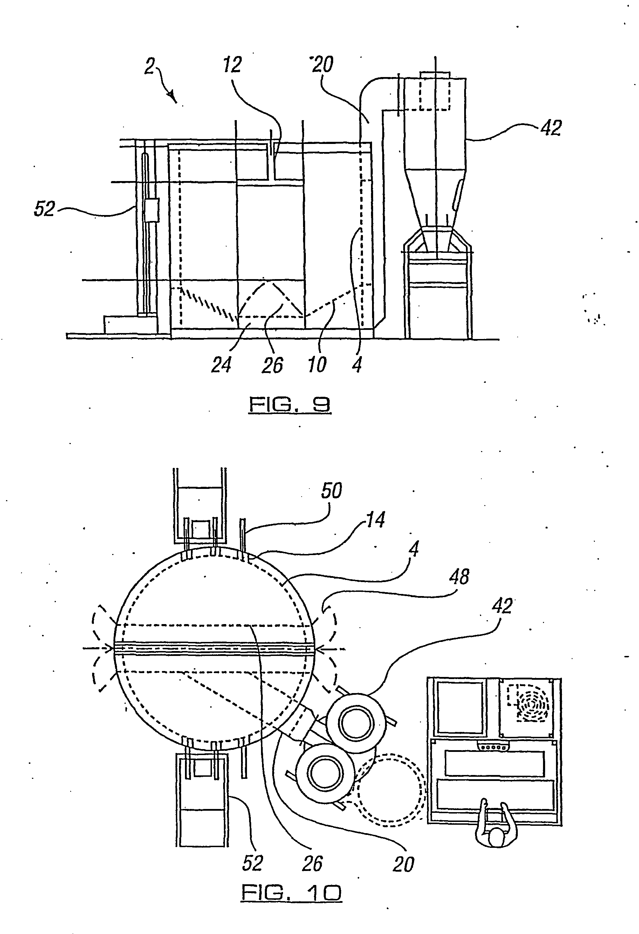

Figures 9 and 10 illustrate a circular booth 2 with a centrally located overspray intake leading via a duct 20 to a cyclone separator 42. A diverter plate 26 extends diametrically across the booth 2 below the path taken by articles to be sprayed which enter and leave via openings which may be closed by doors 48. On either side of the plate 26, the booth floor 10 slopes upwards towards the booth wall 4 in each side of which three slots 14 are provided for automatic guns shown schematically at 50 together with the gun mounts shown schematically at 52. As in the embodiment of Figures 1 and 2, the diverter plate 26 may be hinged along one edge so that it can be raised up to the side for cleaning of the trough 24, as is illustrated in dot-dash lines in Figure 9.

The circular booth 2 has a low height and so no pit or platform is required. An operator can easily walk into the booth 2 so that it can be cleaned of any residual powder when changing colours by wiping. There is no safety issue as in current commercial booths since the operator cannot fall into a deep conical floor as there is none.

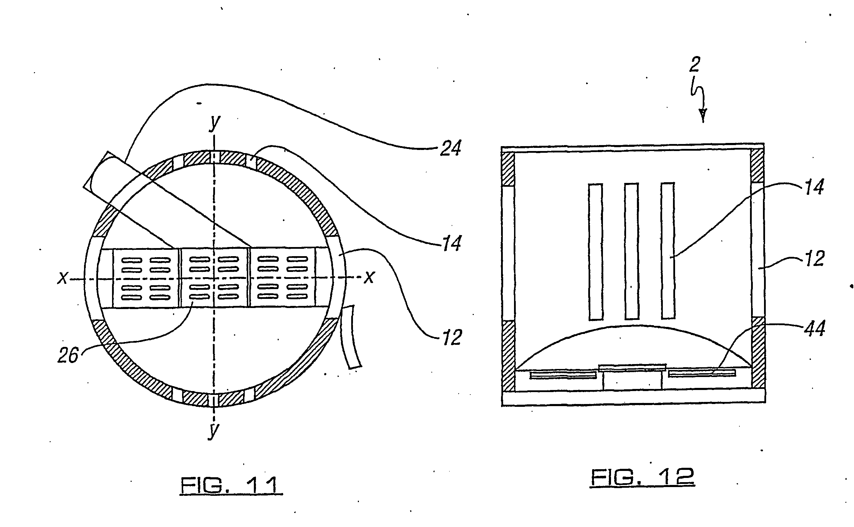

Figures 11 to 13 illustrate a circular booth 2 where a central, diametrically extending, diverter plate 26 is arranged in stepped fashion similarly to the embodiment illustrated in Figures 7 and 8. The diverter plate 26 is formed in three sections 44, the two side sections being lower than the central section which is above the extraction point. The result again is balanced air flow through the booth 2 and even suction across the booth base because the duct 24 is narrowest in the regions most remote from the extraction point.

As can be seen in Figure 11, the diverter plate sections 44 may be slightly peaked which, as noted above with respect of Figure 6, enhances strength and stiffness. Figure 11 also shows that the diverter plate sections 44 may be hinged to one of the side portions 22 to allow them to be moved up to the pdsition shown in dotted outline and thereby give access to the trough 24 which extends through the booth.

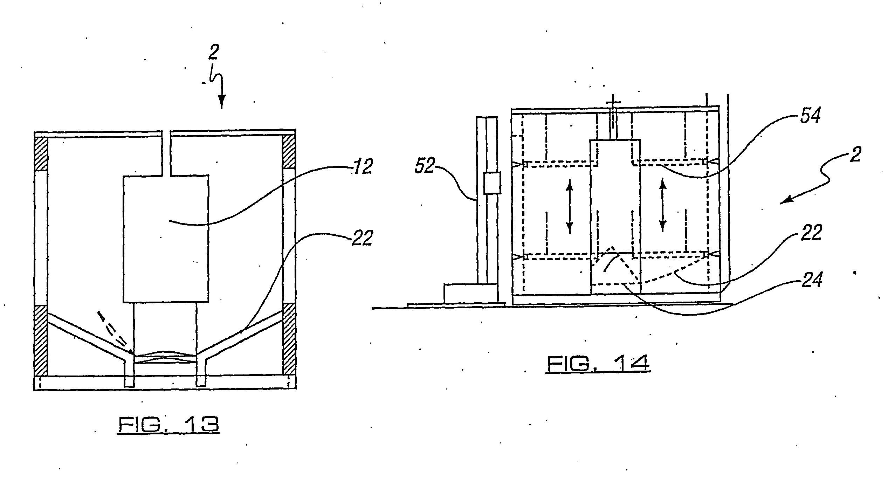

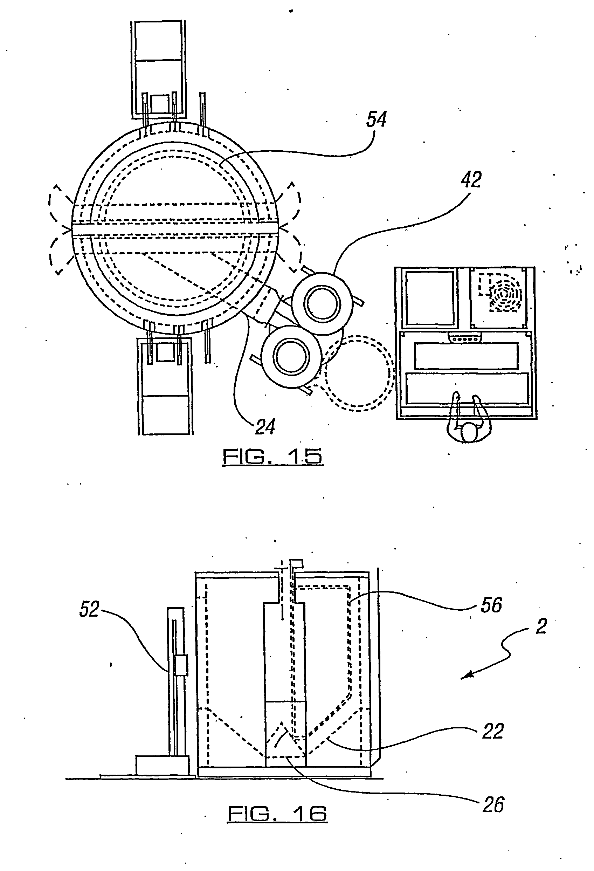

The circular booths 2 of Figures 9 to 13 can be manually cleaned such as by blowing them down with an air wand or wiping. Alternatively, automatic cleaning devices could be used. Figures 14 and 15 illustrate an automatic cleaning arrangement with a double "D" profile cleaning air ring 54 shown in both an upper position and a lower position. The ring 54 directs air towards the walls 4 of the booth 2 as it is lowered and raised therein. As cleaning ring 54 is lowered from the ceiling, it blows any powder which has collected on the walls down the walls of the booth and into the collection system housed in the lower portion of the booth. The ring 54 may be retracted into the booth roof for normal cleaning.

Figure 16 illustrates an alternative system for automatic cleaning which comprises an air cleaning frame 56 which rotates inside the booth 2 whilst blowing air onto the walls 4 and floor 10 to remove deposited overspray powder which is collected through the trough in the bottom of the booth. The cleaning frame 56 could be partial as illustrated or could be double-sided or mirrored to speed cleaning. The frame 56 would preferably be parked outside the booth 2 when the booth is in normal operation. To clean the booth 2, the frame 56 would be attached to the conveyor and moved into the booth 2.

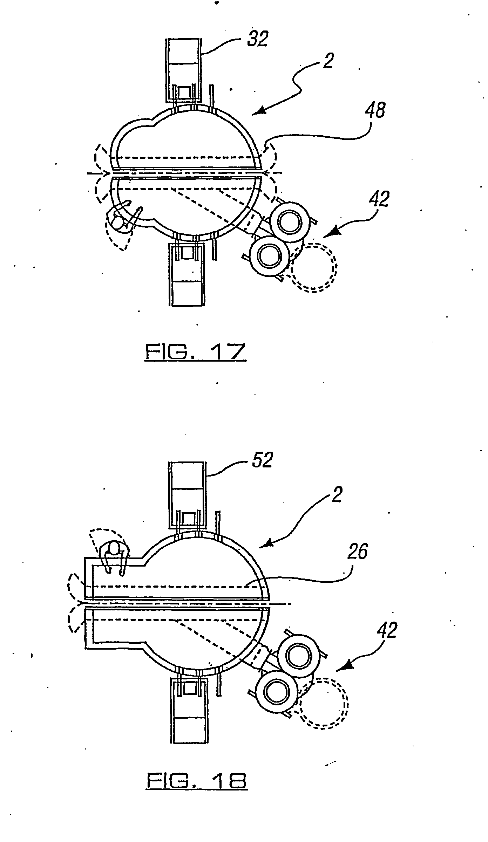

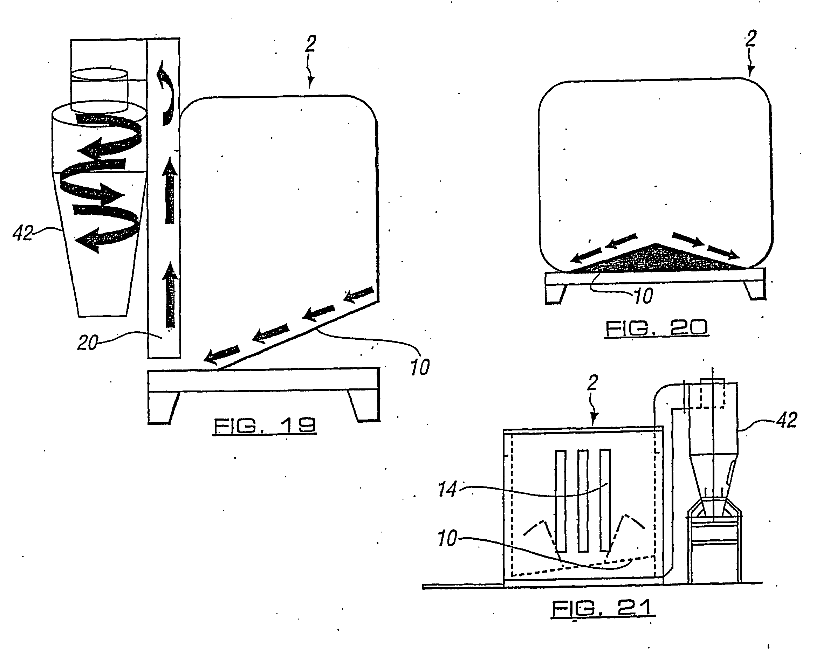

In order to allow manual powder coating guns to be used in combination with automatic powder spray guns, the circular configuration shown in Figures 9 to 16 may be modified to provide at least one station for an operator. Figures 17 and 18 illustrate modified booth shapes which accommodate manual spray guns. The illustrated configurations allow manual spray guns to be used from both sides of the booth 2 but manual guns used from one side alone may suffice in which case the other side would preferably be smoothly curved to prevent accumulation of powder therein. It will be appreciated that other shapes are possible. For example, rather than being indented as shown in Figure 18 the booth walls may be straight between the sides of the article entrance slot 12 and the automatic gun slots 14.

All of the circular booths embodiments may be provided with air assisted overspray collection by fitting plenums to direct air jets down the floor side portions 22 and so cause movement of deposited overspray thereon into the trough 24 and onto the diverter plate 26. As with the rectangular booth embodiments, the provision of air assist will mean that the sloping of the side portions 22 may be reduced which will make it easier for operators to move around within the booth 2 and facilitate its construction.

The air assist need not be used in conjunction with a diverter plate 26. Figures 19 to 21 illustrate arrangements in which air assist is employed simply in combination with a sloped floor portion. In the arrangement of Figure 19 nearly the whole of the floor 10 is sloped and the air assist is provided across the complete upper edge of the sloped floor 10. This Figure also serves to show schematically the withdrawal of air borne overspray powder via duct 20 and into a cyclone separator 42 of a powder recovery system.

In a circular booth, the whole of the booth floor 10 may be sloped. This is illustrated in Figure 20 which shows a circular booth 2 having a sloped floor 10. As also illustrated the floor may be perforated and formed in three sections with the outer sections being hinged or otherwise raisable to facilitate cleaning. In the Figure 20 embodiment, the center section of the diverter plate would remain stationery and the outer two sections could be hinged upwardly to allow the operator to enter from either side of the booth.

Figure 21 shows a further alternative in which the floor 10 has a triangular cross-section and the air assist is provided at the apex thereof. As shown by the arrows, the air assist moves deposited overspray powder down each side of the floor 10 to prevent build-up on the floor 10 and to collect the deposited overspray at the sides of the booth 2. The booth 2 may have side inlet ducts for receiving the collected overspray powder and directing it to the powder recovery system.

In still further alternatives, the air assist is provided across other non-sloped internal surfaces of the booth 2, for example, one or more of the walls or the ceiling. Air assist can also be provided to an advantage with a non-sloped floor. A particular embodiment which may have great utility is to provide air assist centrally of the booth disclosed in European Patent Application No. 98940476.9 such that the jets of air are directed towards the ends of the booth and thus to each of the overspray intakes provided at those ends. The air assist will facilitate collection of deposited overspray powder on the floor and movement thereof towards the overspray intakes for recovery by the powder recovery system.

In all these alternatives, the air assist may be continuous or pulsed. The latter has the advantage of economy due to reduced energy requirements for the air source and therefore cost savings.

With a long run between the colour powder changes, it is desirable that an air pulse be provided periodically, whilst with short runs, it can suffice to provide a pulse just prior to the colour change.

Reverting to Figures 1 and 2, the cleaning operation which is performed when the colour of the powder is to be changed will now be described. It will be appreciated that the description applies equally to the other embodiments provided with a diverter plate 26 and a powder recovery system which provides for air exhaust. The powder spray devices are shut off and doors closed across the access openings 12 in the end wall 6. The diverter panel 26 is pivoted up against the adjacent end wall 6 as too are the doors 32 to the vertical duct 20. An operator preferably using an air hose, begins at the opposite end of the booth 2 from the vertical duct 20 and moves along the booth blowing the deposited overspray powder which remains therein from all wall and floor surfaces including the sloped floor surfaces and the surfaces of the diverter panel 26, the floor duct, the vertical duct 20 and the overspray intake 18. The operator may open each diverter panel individually as he walks along the length of the booth so that the floor duct will still transport the blown off powder to the overspray intake, the vertical duct and the powder recovery system. These last two operations are simplified because of the hinged mounting of the diverter panel 26 and the doors 32 of the vertical duct 20. As the powder is blown off of the surfaces of the booth, it is drawn into the extraction duct 20 by the fan.

The amount of deposited overspray powder which has to be removed in this operation is much less than with known booths because a significant proportion of the deposited overspray powder will have already been removed due to the action of the diverter plate 26, sloped side portions 22 and the air plenums 34. Consequently the amount of recycling work to be done during the cleaning process is reduced which reduces labour costs. Also, in some prior systems, powder has to be collected in a dust pan or waste container and thrown away because recycling has not been completed by the time the cleaning process is over. This waste of powder coating material will not occur in the present system due to the reduced time and effort required to clean the booth.

In tests with this booth, it has been found to be possible to reduce booth cleaning time to below fifteen minutes.

These improvements in colour change capability are achieved whilst at the same time improving the actual performance of the booth since the diverter plate 26 acts to even out, or balance across the length of the booth the air flows which draw oversprayed powder into the system. This has the effect of improving the transfer efficiency of the guns because the powder particles have a better opportunity to attach to the part being coated. In addition, oversprayed powder is more effectively contained within the booth by mans of this design.

In accordance with another aspect of the invention, spray booth cleaning and color change times can be significantly reduced by using spray booth wall structures made of non-conductive cored composite materials. The non-conductive nature of the cored composite wall structure eliminates electrostatic attraction between the overspray powder particles and the interior or functional surface of the spray booth walls. As used herein the term "wall" is used in its broadest sense to include but not be limited to vertical walls, panels, doors, plates, ducts, covers, floors, ceilings and so on. The cored composite wall structure and manufacturing processes and assembly techniques hereinafter described may be used with any desired spray booth configuration, not just the exemplary designs described herein. The cored composite structures described herein are especially useful in making enclosures and structures used with electrostatic application systems such as electrostatic powder spray booths as described herein; however, such description is intended to be exemplary in nature and should not be construed in a limiting sense. For example, the invention may also be used for non-powder application systems as well as non-electrostatic application systems.

Although the described embodiments herein relate to a spray booth enclosure and structural panels and walls therefor, the cored composite structures may be used for many different parts of such an enclosure, including but not limited to spray booth walls, feed hoppers, color module housings such as for powder recovery systems, cyclones, after filters and so on.

In accordance with one aspect of the invention, a cored composite wall structure is provided that is characterized by a first skin layer made of fiber reinforced thermoset resin materials, a second skin layer made of fiber reinforced thermoset resin materials, and a core sandwiched or positioned between the first and second skin layers. One of the skin layers forms a functional side or surface of the cored composite wall, meaning that the functional side is exposed to overspray powder such as occurs within a spray booth interior. The opposite skin layer forms a non-functional side or outer surface of the spray booth.

By "composite" structure is meant that the structure includes a generally homogenous material created by the synthetic assembly of two or more materials (typically a selected filler, hardener or reinforcing elements and a compatible matrix binder) to obtain specific characteristics and properties. Typical examples and not by way of limitation would be a two part resin based encapsulating material such as an epoxy resin (unreinforced) and glass fiber reinforced resins such as fiberglass materials.

By "cored" composite structure simply means that the structure includes a structural core material disposed between two composite skins or layers. Typically the core will be integrally bonded to the skins or layers with a suitable thermoset encapsulating or bonding material. Preferably but not necessarily the encapsulating material comprises a resin that is the same as the composite layer resin.

By "thermoset" is meant that the material when cured by the application of heat or chemical reaction, changes into a substantially infusible and insoluble state. An epoxy resin is again a typical example of a thermoset material by which the epoxy resin and the hardener cure when brought into contact with each other into a hardened matrix that is not reversed by application of heat.

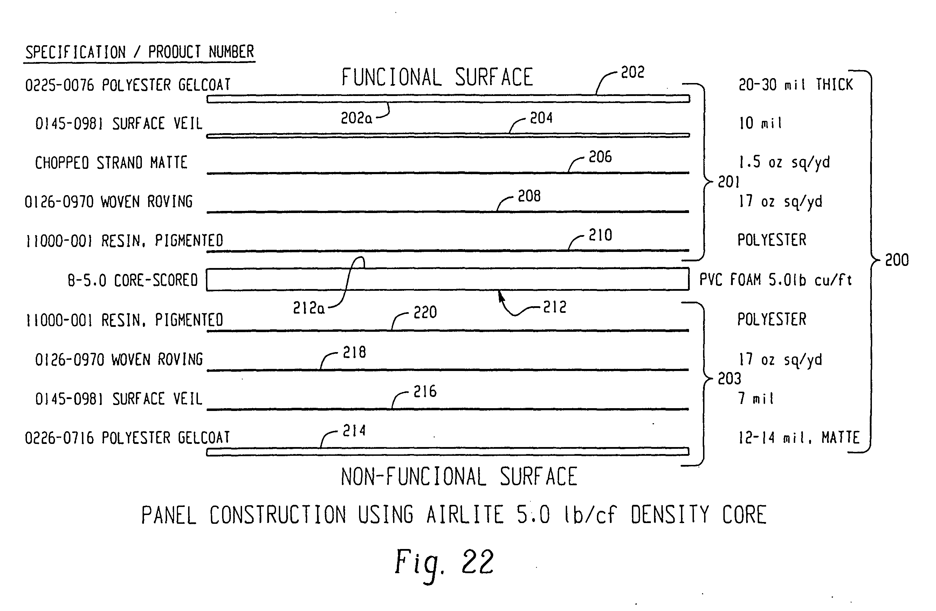

With reference to Figure 22, an exemplary embodiment of a cored composite wall structure 200 in accordance with the invention is illustrated in exploded form. The layers are illustrated as they would be laid up in a suitable tooling arrangement as will be described further herein. Many of the materials and alternative materials used in the cored composite wall structure 200 are fully described in the above referenced PCT publication WO 01/78905 and reference may be made to that document for additional details.

The cored composite wall structure 200 has a first or inner skin layer 201, a second or outer skin layer 203 and a sandwiched core 212. The inner skin layer 201 includes a first layer 202 that forms the inner surface of a wall section that is part of a spray booth, and hence is referred to as being on the functional side of the wall structure 200. The first layer 202 is an unreinforced two component resin layer such as a polyester gelcoat which forms a smooth interior surface. The gelcoat layer 202 may be any suitable thickness, in this illustrated case 0.02 to 0.03 inches. The gelcoat layer 202 may also be suitably pigmented for aesthetic appearance. The smooth hard white surface is easier for workers to see oversprayed powder that is adhering to booth interior canopy surfaces which must be cleaned during a color change operation. The gelcoat layer 202 forms a durable interior surface that is impervious to moisture adsorption and does not degrade over time or due to ultraviolet light. In addition, it is impact and scratch resistant and scratches that do form can be easily buffed out. Suitable resins for the gelcoat layer 202 in an electrostatic powder spraying environment are those that cure into non-conductive, resilient, moisture impervious layers, such as an epoxy based resin system, polyester or a vinylester resin system. Derakane 441 400 from Dow Corporation, and COREZYN VEX 169 540, from Interplastic Corp. of St. Paul, Minnesota, are exemplary of suitable vinylester resins for this purpose.

The second layer 204 is an optional surface veil made of nonwoven E-glass reinforcing fibers. The surface veil 204 is used primarily for improving aesthetic appearance by preventing print through of underlying layers. The surface veil 204 typically is about 0.01 inch thick though any suitable thickness may be used, and is available from Owens Corning. The glass fibers in a veil are longer in general and are dispersed in a swirled fashion within the veil and typically are held in a binder that is soluble in the encapsulating resin of the composite structure.

The third layer 206 is an optional non-woven chopped strand mat. Chopped strand mat is a well known random orientation glass fiber composition. Although the chopped strand mat material is a commodity product with various weight densities and manufacturers, a 1.5 ounce E-glass chopped strand mat from Owens Coming is suitable. The chopped strand mat layer 206 also reduces print through, but further is used as a non conductive reinforcing layer to increase impact and shear resistance strength. The glass fibers in a chopped strand mat are typically shorter than in a veil but are also held in a binder that is soluble in the encapsulating resin.

The fourth layer 208 is optional and is a woven roving of E-glass reinforcing fibers, such as for example, 17 ounce woven roving available from Brunswick Technologies, Inc. The woven roving layer 208 may be used for added shear strength and impact resistance.

It is noted that the various glass reinforcing layers used in the exemplary embodiment may be chosen based on their weight and fiber orientations in order to have a desired property. For example, the nonwoven veil and chopped strand mat are weakest in terms of reinforcing strength, but are primarily used for appearance and less expensive. The woven roving layer is stronger, but additional options include knitted unidirectional, bidirectional, tridirectional, 45° bidirectional or drop stitched E-glass layers which exhibit increasing degrees of reinforcing strength as listed but also are more expensive. The designer may thus choose the reinforcing layer materials based on the strength, cost and appearance requirements for a specific application.

Besides glass reinforcing fibers, alternatively other reinforcing fiber materials may be used such as S-glass and poly-para-phenylene-terephthalamide, sold under the trade name KEVLAR by DuPont. Carbon fibers, although conductive, may be suitable in some applications since they have very high strength to weight ratios. The reinforcing layers will be chosen based on the booth design, for example, a cored composite wall that will be used as a floor for walking on may require higher reinforcement than a ceiling wall.

For low cost, lower strength applications it may be suitable simply to omit the veil 204 and the reinforcing layer 208. Though not the strongest reinforcing layer materials, the chopped strand mat layer 206 may provide adequate strength in some applications.

A fifth layer 210 of a suitable encapsulating material is provided, prior to cure, between the woven roving layer 208 and the sandwiched core 212. The encapsulating material layer 210 is preferably a two component thermoset polyester, vinylester or epoxy resin system. The encapsulating layer 210 is used to encapsulate the fiber reinforcing layers (in this example, the veil layer 204, the chopped strand mat layer 206 and the woven roving layer 208. The encapsulating layer 210 also establishes bonds between the reinforcing layers and an inner surface 202a of the gelcoat layer 202 and one surface 212a of the core 212.

The encapsulating layer 210 is initially laid up as a separate layer of resin such as polyester. As will be described herein, the resin flows under pressure, vacuum and heat to encapsulate the reinforcing layers, and bond the first skin 201 elements together and to the core 212.

On the non-functional side of the wall structure 200, the second or outer skin 203 includes similar layers as the inner skin 201, except that the chopped strand mat layer is not used since the aesthetic appearance and texture of the outside surface does not require the same surface finish as the functional side. The gelcoat layer may also be made with a reduced thickness.

Accordingly, the outer skin 203 includes a gelcoat layer 214, a surface veil layer 216, a layer of woven roving 218, and an encapsulating layer 220 such as, for example, a polyester resin. These layers may be the same or different as the materials used for the layers in the inner skin 201. Since appearance and surface finish features of the outer skin 203 are less stringent than the inner skin 201, the gelcoat layer 214 and the surface veil 216 may be thinner. The resin layer 220 encapsulates the various layers of the outer skin 203 and bonds the structure to an opposite surface 212b of the core 212.

The core 212 may be selected from any number of a wide variety of materials. Preferably, the core 212 comprises a non-conductive material such as polyvinylchloride (PVC) foam. A suitable material is a semi-rigid, closed cell PVC foam. With the process described below, a lower density PVC foam may be used as compared to the density of the core used in the above referenced patent applications. The ability to use lower density PVC foam represents a significant cost reduction. For example, a PVC foam density as low as about 2.5 pounds/ft³ available from BALTEC may be used. Presently, 2.5 pounds/ft³ is the commercially available minimum foam density, and it may be that in the future suitable lower density foams will be available. Different wall structures of a spray booth may use different density cores for added strength, such as floor sections. Use of lower density cores allows for use of thinner core dimensions. Still further, within a single wall structure the cored composite material may include a variable density distribution. For example, in a panel that will include an opening such as for a door and having to support a hinge, it may be desired to use a higher density core at that location in the panel.

Other suitable core materials include but are not limited to end grain balsa, glass reinforced polyisocyanurate, polyisocyanurate, polyurathane, plywood, polystyrene, syntactic foams, or paper based honeycombs. The selected material will depend on various requirements of a particular application as to moisture content, strength requirements, degree of nonconductivity needed, and so on.

It is noted that for lower cost booth requirements, the first and second skins 201, 203 may be minimalized in terms of the encapsulated layers. The minimum structure for a reinforced inner skin 201 would include the gelcoat layer 202, a chopped strand mat layer 206 and a bonding layer 210 such as a polyester resin. Such a minimal reinforced structure would exhibit an inner surface having a comparatively reduced surface quality and structural strength, but may be appropriate in some low cost applications. The outer skin 203 may similarly be minimized to three layers including the gelcoat layer 214, a chopped strand mat and an encapsulating layer 220.

Still further, the gelcoat layers 202, 214 may optionally be molded directly to the core, although this will reduce the strength of the wall structure compared to a less minimal skin structure, but which still may be suitable in some low cost, low strength applications. In such a case, the core would be relied upon to carry all the mechanical loads with the gelcoat serving as a smooth sealed finished surface.

An exemplary process for forming a cored composite wall structure such as, for example, illustrated in Figure 22 will now be described. Although this process is described in terms of producing flat panel type wall structures, it is contemplated that appropriate tooling can be provided so as to used the process to produce non flat wall structures.

In the exemplary process, the various layers are laid up manually. A platform mold of selected dimensions is used to support the layers. After the various layers are laid up, a pressure plate or other suitable mechanism for applying a compressive load to the layers is positioned over the layers.

In accordance with another aspect of the invention, the tooling surface used for the functional side is realized using a sheet of polyester film, such as, for example, film sold under the trade name MYLAR by DuPont, or other suitable material. First, a gelcoat layer is applied to a MYLAR sheet, partially or fully cured, and then the MYLAR/gelcoat material can be rolled up as a layer for subsequent use.

The MYLAR/gelcoat layer is first placed onto the tooling platform, then the rest of the layers of the cored composite structure are laid up. Note that the encapsulating layers are applied during the lay up steps. An additional MYLAR layer is positioned between the top gelcoat layer and the pressure plate.

After the layers are in place, the pressure plate is positioned on top of the layers, and a vacuum bag is used to enclose the materials and tooling. A vacuum is pulled, for, example 25 inches of mercury, which results in the generation of an evenly distributed compressive load on the materials via the pressure plate. The amount of compression applied will depend on the materials used for the various layers of the cored composite structure. The compressive load and vacuum helps to uniformly distribute the resin bonding material throughout the structure. The vacuum also is used to draw entrapped air from the structure.

Heat may be applied during the vacuum and compression time. Typical temperatures may be about 80 °F to about 140 °F although the actual temperatures will depend on the materials being used and the desired cure time. The use of heat decreases the viscosity of the resin bonding material so that the resin flows more easily throughout the composite structure. Heat also accelerates the curing time for the resin. As a consequence, lower density cores can be used as compared to prior processes because the shorter cure time lessens the effect of styrene attack on the core.

It should be noted that under this process the gelcoat layers 202, 214 separate from the MYLAR tooling surface as it is bonded to the composite structure, because thermoset resins do not bond or adhere to thermoplastic materials such as MYLAR without special additional treatments. The gelcoat layers thus become part of the finished composite structure and the MYLAR separates there from. The MYLAR sheets can then be reused as a tooling surface to produce additional composite structures. MYLAR also produces an exceptionally smooth surface to the gelcoat layer thereby eliminating post cure secondary finishing operations. This smooth micro-finished gelcoat surface produced by the MYLAR tooling surface improves cleanability of the resultant spray booth functional surface as well as the aesthetics and cleanability of the non-functional surface. The process thus produces a cored composite wall structure that has two as molded finished outer gelcoat surfaces, one on the functional side and one on the non-functional side. By "as molded" means that the surfaces are suitable for use as is upon removal from the mold.

The present invention further contemplates a cored composite wall structure or product made by the above described process. Additionally, the flat panels produced provide for easy assembly and shipment. The result is a significantly lower cost cored composite spray booth compared to prior known processes.

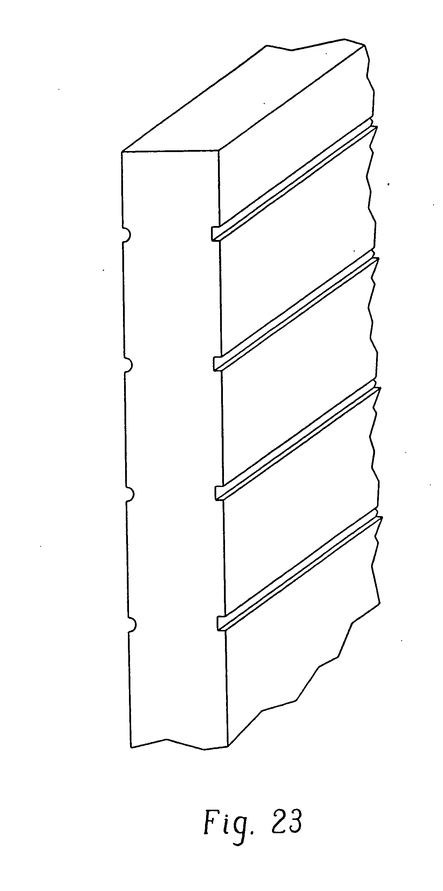

Because the cure times for this process are substantially shortened compared to prior processes, there may not be sufficient time for entrapped air to be ventilated out of the cored composite structure. The core itself is substantially impermeable to air. Entrapped air is undesirable in some applications as it can produce surface irregularities and also can cause overspray powder attraction. In order to eliminate this problem, the core 212 may be ventilated to provide air passageways or channels 250 that allow entrapped air to be ventilated. The core may be ventilated, for example, by cutting, thermoforming, pressing or otherwise establishing channels, slits, kerfs or other suitably shaped air passageways in the core surfaces. Resin encapsulating material eventually flows during cure into these core surface channels or kerfs 250. The passageways 250 can be laid out in any desired pattern, with one example being from end to end along the short side of the composite wall. Figure 23 illustrates such an example. A typical kerf may be about 1/16" wide by 3/32" depth at one inch center to center spacing, however, these values are only exemplary and may be changed as required for a particular application.

With reference again to Figure 1, the use of composite thermoset resin based wall structures for the spray booth 2 provide various options to form mechanical joints to assemble the booth, particularly when the composite structures are generally flat rectangular walls. Of particular note is that the composite resin walls allow use of two component epoxy resin bonding materials at various lap joints and comer joints. Two component resin based bonding materials are both very low in conductivity and also provide very strong structural bonds, particularly in contrast to solvent based adhesives or thermowelding commonly used with thermoplastic wall structures. Since the composite walls are thermoset resin based structures, preferably although not necessarily the mechanical joint members are made of a thermoset resin that can be resin bonded to the composite wall structures. Alternatively, however, for example, the mechanical joint members may be made of suitable thermoplastic materials with appropriate adhesive technology for bonding the members to the composite walls, although this may in some cases reduce the load bearing properties of the joint. Thermoset resin members will provide exceptional strength at the load bearing mechanical joints.

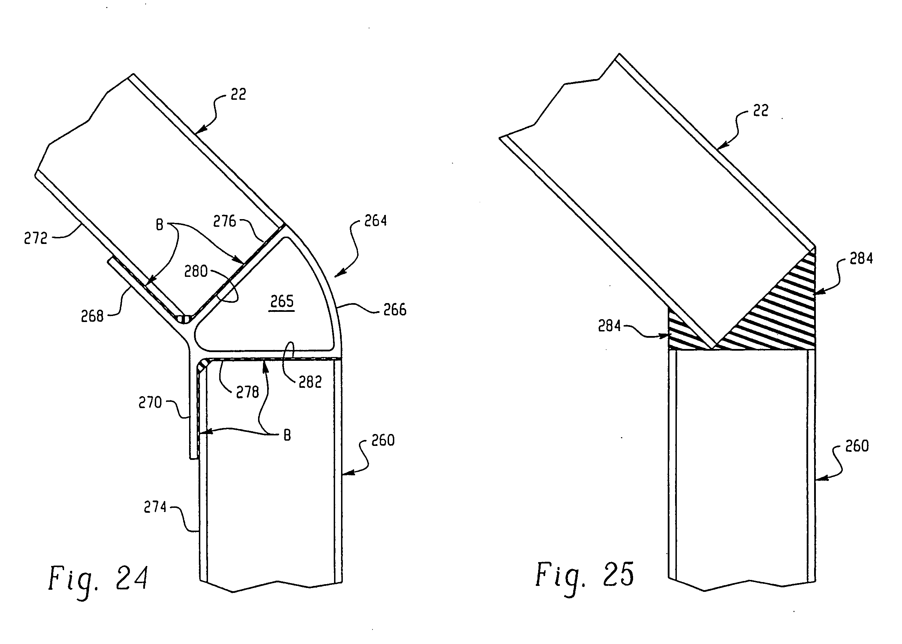

Figures 24, 25 and 26 illustrate various mechanical joint techniques in accordance with the invention for joining the sloped floor panel 22 to a vertical wall portion 260 of the trough or floor duct 24 (area N circled in Figure 1) using two generally flat panels.

In Figure 24, a non-conductive pultrusion 264 may be shaped generally as a knee joint. The pultrusion 264 may be made of any suitable non-conductive material such as fiberglass having good structural strength. The knee joint 265 includes a contoured surface 266 on the functional side of the panels 22, 260 to minimize overspray powder entrapment. On the non-functional side, the knee joint 264 includes appropriately angled support legs 268, 270 which are bonded to the outside (non-functional) surfaces 272, 274 of the joined panels 22, 260 respectively. Bonding areas are identified by the letter B and may be bonded, for example, with a two component epoxy resin bonding material or other suitable bonding material. The knee joint 264 also includes bonding surfaces 276, 278 that are bonded to the edges 280, 282 of the panels 22, 260 respectively. The pultruded knee joint 264 may include a hollow channel 284 to reduce material or to provide pressurized air.

Those skilled in the art will readily appreciate that the pultruded knee joint 264, as well as other pultruded support members described herein, may be manufactured by techniques other than pultruding, such as for example, by molding although this would typically be at a higher cost.

The knee joint 264 is contemplated to be a single piece that runs the length of the spray booth 2 along the joint between the joined floor panels 22, 260, however, sectional pieces may also be used as required.

Figure 25 illustrates an alternative technique for joining the sloped and vertical flat panels 22, 260. In this example, an epoxy-resin fill 284 is applied at the joint and allowed to cure in place.

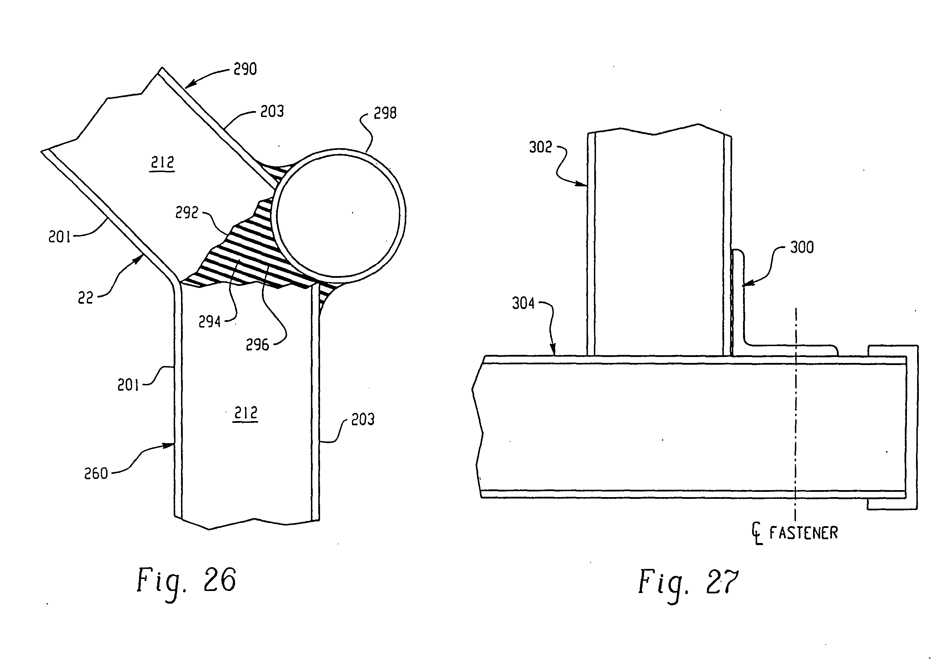

Figure 26 illustrates another alternative technique to form the sloped floor/vertical wall mechanical joint. In this example, a single flat panel 290 is cut as at 292 up to about 90% or so through the panel, starting the cut from the non-functional side through the outer skin 203 and the core 212. This allows the panel to be bent at the cut area to form the sloped floor portion 22 and a vertical wall portion 260. Note that the inner skin 201 has sufficient strength to hold the partially cut sections together. When the cut portions are bent away from each other, a void 294 is present that is then filled with a suitable two component resin 296. If additional reinforcement is needed, a pultruded tube 298 may be bonded to the resin file 296. This tube 298 is on the non-functional side of the floor. In this embodiment, due to the strain placed on the inner skin 201, it is preferred that the inner skin 201 include a woven roving layer as described hereinbefore.

An additional option for joining flat panels at an angle is to cut the panels to form a mitre joint, with a suitable resin used to bond the panels together.

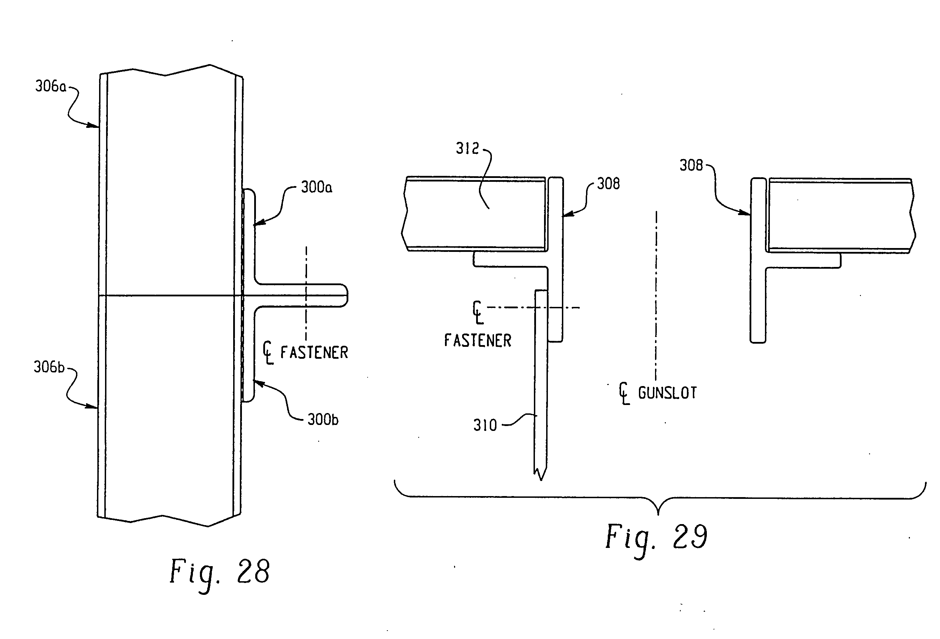

Figures 27 and 28 illustrate exemplary uses of a pultruded angle 300 used to join two composite panels 302, 304 together. In Figure 27, the pultruded angle 300 is resin bonded to one of the panels 302, and a threaded fastener (not shown) is used to attach the angle 300 to the other panel 304.

The angle 300 may alternatively be bonded to both panels or fastened to both. Fasteners and bonding material may both be used for added structural support. Figure 28 illustrates the use of two angles 300a and 300b used to vertically join or stack two cored composite panels 306a, b together, for example, for assembling a higher spray booth. Again, the angles are bonded to their respective panels and either fastened or bonded together. Figure 29 illustrates a T-bar pultrusion 308 that can be used for a ceiling or door attachment. The T-bar 308 may also be used a illustrated on the left side of Figure 29 to mount a gunslot extension panel 310 to a vertical wall panel 312. alternatively, the T-bar may instead be replaced with a simple straight flat bar or slat. The support pultrusion designs described herein typically will extend substantially along the length of the mechanical joint.

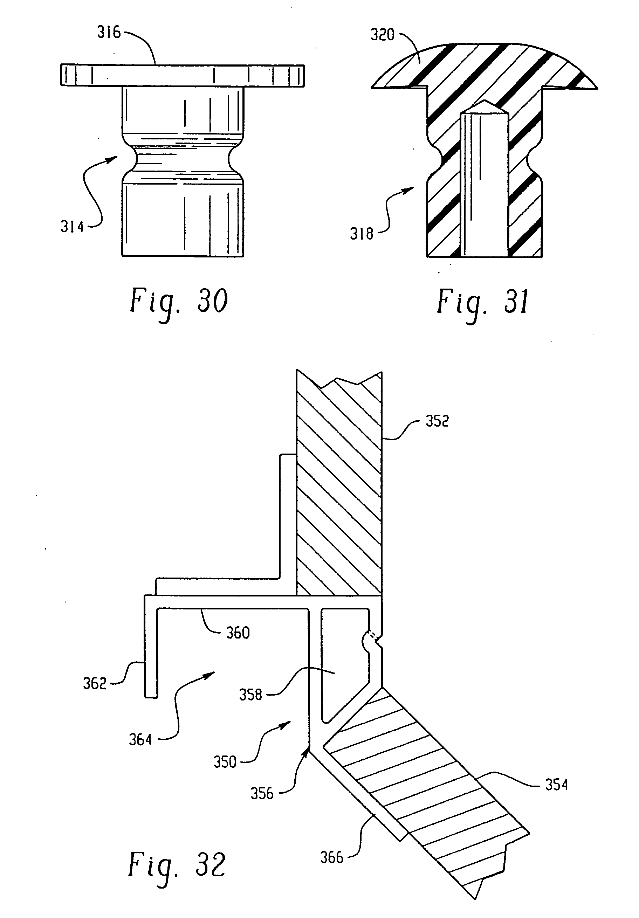

Figure 30 illustrates a load bearing non-conductive bushing 314, such as may be made of glass filled NYLON or DELRIN, for example. The bushing 314 includes an enlarged head 316 and may be used to distribute load stresses against a panel. The bushing 314, for example, may be used in connection with threaded fasteners and through bolts. Figure 31 illustrates a blind tapped mushroom cap bushing 318. The cap 320 forms a smooth surface that minimizes overspray powder retention inside the spray booth 2.

Both the bushing 314 and the bushing 318 include an indentation or other recess 319 formed in the shank 321 of the bushing. When the bushing is installed into a hole formed through a cored composite wall, the bonding resin is applied to the shank 321, especially in the area of the indentation 319. As the resin cures, it strongly bonds to the core but will tend not to bond to the bushing itself. However, the resin will cure into a shape that conforms to the indentation and thus will function as a resin type lock ring to retain the bushing in the wall structure.

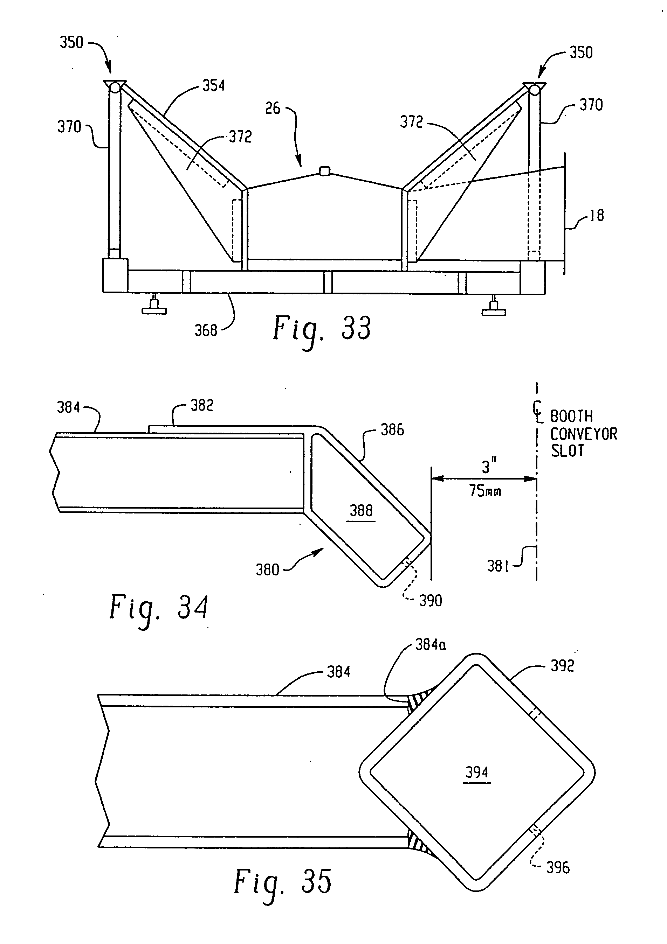

Figure 32 illustrates another type of pultrusion 350 that may be used to form an angled mechanical joint between two panels 352 and 354 (corresponding, as an example, to the wall portions 22 and 260 of the spray booth 2). In this example, the pultrusion 350 includes a preferably hollow central body 356 having a passageway 358 therein that may be in fluid communication with a source of pressurized air. Even if pressurized is not used, the hollow body 356 saves weight and material. A first support leg or flange 360 extends from the main body 356 and is bonded or otherwise attached to the vertical booth wall 352. The first support leg may include an extension 362 that in combination with a generally parallel wall 356a of the main body, forms a channel or rail 364. This channel 364 may be used to mount the pultrusion 350 (and the supported walls thereon) onto a booth support frame (see Figure 33). An additional angle pultrusion 300 (for example, as in Figure 27 hereof) may be used as a brace to further support the vertical wall attachment to the angled joint pultrusion 350. A series of air jets 357 may be formed in the body 356 and appropriately angled so as to direct a flow of air from the air passageway 358 across the functional surface of the booth floor panel 354 to reduce powder collection thereon during a spraying operation.

A second support leg or flange 366 extends from the main body 356 and is bonded or otherwise attached to the sloped floor panel 354.

Figure 33 is an end view of an exemplary floor portion of the spray booth 2 illustrating use of the wall mount protrusion 350. Note that the sloped floor panel 354 is shown but the vertical booth panel is omitted for clarity. A separate pultrusion 350 is used on each side of the spray booth. A suitable frame structure 368 is used to allow the booth to be moved about a shop floor if needed and also supports the spray booth on the shop floor. The frame 368 includes a series of vertical legs 370 that are secured to the rail portions 364 of the mounting pultrusion 350. A series of gussets 372 may be provided to further support mechanical joint between the sloped floor 354 and the vertical wall 260 (Figure 1) of the floor duct 24. These gussets 372 are preferably non-conductive and may be, for example, made of fiberglass.

Figure 34 illustrates another pultruded form in the form of an air knife 380 that may be used to provide an air curtain at the conveyor slot (centerline 381) along the ceiling of the spray booth. In this example, the air knife pultrusion includes a support leg 382 that may be bonded or otherwise attached to the non-functional side 384 of the spray booth ceiling panel (it should be noted that Figure 33 only illustrates one half of the air knife, that there will be a mirror image structure on the other side of the conveyor slot). The air knife pultrusion 380 includes a hollow body 386 that forms an air passageway 388 therein that is in fluid communication with a source of pressurized air. An air jet 390 extends through one wall of the body 386 so as to direct a flow of air downwardly into the spray booth interior. The pultrusion 380 preferably extends lengthwise along the entire length of the conveyor slot and includes a sufficient number of air jets 390 spaced along the length thereof to produce a curtain of air that helps contain overspray powder within the booth and not escape through the conveyor slot. Figure 35 illustrates a simpler embodiment of an air knife for the conveyor slot. In this example, a simple rectangular (illustrated) or square or round or other suitable shaped pultrusion 392 is bonded to the inner side 384a of the ceiling panel at the conveyor slot. Again, the pultrusion includes an air passageway 394 and a series of lengthwise extending air jets 396.

It should be noted that a similar arrangement may be used at the gun slots 14 (Figure 1). In such a case, the wall panel 384 in Figure 33 would be a vertical wall panel of the booth 2, and the "slot" would be a gun slot 14 rather than the conveyor slot. The pultrusion 380, 392 would thus be used to provide an air curtain at the gun slot 14 to prevent overspray powder from escaping through the gun slot 14.

## Claims

1. A cored composite structure comprising a first composite layer, a second composite layer, and a core between and bonded to each said first and second composite layers, said core comprising closed cell foam, said composite being formed in a mold and said first and second composite layers each having an as molded finished surface that is opposite an interface with said core.

2. The structure of claim 1 wherein said core and said first and second composite layers are bonded together with a thermoset resin.

3. The structure of claim 2 wherein said first and second composite layers comprise a thermoset fiber reinforced resin.

4. The structure of claim 2 or claim 3 wherein said first and second composite layers comprise gelcoat.

5. The structure of claim 1 wherein each said first and second composite layer comprises a fiber reinforced thermoset resin material and an unreinforced thermoset resin material.

6. The structure of any preceding claim wherein said core comprises one or more passageways in a surface thereof to ventilate air that could otherwise be trapped.

7. An electrostatic powder spray booth made of at least one cored composite wall structure, said wall structure comprising a low density foam core between first and second composite layers and bonded thereto by a thermoset encapsulating material.

8. The booth of claim 7 wherein said first and second composite layers each comprise a fiber reinforced thermoset resin.

9. The booth of either claim 7 or claim 8 wherein each of said composite layers comprise gelcoat.

10. The booth of any one of claims 7 to 9 wherein said encapsulating material comprises a two component resin system.

11. The booth of any one of claims 7 to 10 comprising at least one nonconductive support member that forms a mechanical joint between two said cored composite wall structures, said support member being resin bonded to at least one of said wall structures.

12. An electrostatic powder spray booth comprising a first cored composite wall, a second cored composite wall, and a nonconductive member that is joined to each of said first and second walls to form a mechanical joint therebetween.

13. The spray booth of claim 12 wherein said nonconductive member is bonded to said first and second walls by a two component thermoset resin system.

14. The spray booth of claim 12 wherein said nonconductive member is attached to said first and second walls by a nonconductive fastener.

15. The spray booth of any one of claims 12 to 14 wherein said member comprises a pultrusion, said pultrusion comprising a hollow body and two mounting flanges that extend there from with each said mounting flange being attached to a respective wall using a two component thermoset resin system.

16. A core for a cored composite structure comprising at least one surface of the core having an air passageway therein.

17. The core of claim 16 wherein said passageway comprises a kerf.

18. The core of claim 16 wherein said passageway extends from end to end on a side of the core.

19. The core of claim 16 comprising a plurality of passageways formed in at least two opposite surfaces of the core.
